# EUROPEAN PATENT SPECIFICATION

(11) **EP 4 068 418 B1**
(45) Date of publication and mention of the grant of the patent: **23.10.2024**
(21) Application number: 21904631.5
(22) Date of filing: 04.02.2021
(51) Int. Cl.: H01M 4/13, H01M 4/139, H01M 10/0525, H01M 4/02, H01M 4/131, H01M 4/133, H01M 4/525, H01M 4/70, H01M 10/052, H01M 10/0585, H01M 10/0587, H01M 50/103, H01M 10/42, H01M 4/36, H01M 10/04, H01M 50/209, H01M 50/531, H01M 4/04

(54) **ELECTRODE ASSEMBLY AND MANUFACTURING METHOD THEREFOR, BATTERY CELL, AND BATTERY**
ELEKTRODENANORDNUNG SOWIE HERSTELLUNGSVERFAHREN DAFÜR, BATTERIEZELLE UND BATTERIE
ENSEMBLE ÉLECTRODE ET SON PROCÉDÉ DE FABRICATION , ÉLÉMENT DE BATTERIE ET BATTERIE

(43) Date of publication of application: 05.10.2022
(73) Proprietor: Contemporary Amperex Technology (Hong Kong) Limited, Central, Central And Western District (HK)
(72) Inventor: TANG, Binjie, Ningde City Fujian 352100 (CN); ZHANG, Yongqiang, Ningde City Fujian 352100 (CN); GE, Xiaoming, Ningde City Fujian 352100 (CN)
(74) Representative: Ziebig Hengelhaupt Intellectual Property Attorneys Patentanwaltskanzlei PartGmbB
(86) International application number: PCT/CN2021/075164
(87) International publication number: WO 2022/165688

(56) References cited:
- CN-A- 109 980 177
- CN-A- 110 010 902
- CN-A- 111 916 844
- CN-A- 111 916 845
- CN-A- 112 086 621
- CN-A- 112 103 463
- JP-A- 2016 012 541
- US-A1- 2005 130 044
- US-A1- 2020 313 171
- US-A1- 2020 313 186

## Description

### TECHNICAL FIELD

The application relates to the technical field of batteries, and particularly relates to an electrode assembly and a manufacturing method and manufacturing system therefor, a battery cell and a battery.

### BACKGROUND ART

A rechargeable battery, also referred to as a secondary battery, is a battery that can be charged and reused by activating an active material after the battery is discharged. The rechargeable batteries are widely used in electronic devices, for example, mobile phones, laptops, battery cars, electric cars, electric planes, electric ships, electric toy cars, electric toy ships, electric toy planes, electric tools, etc.

In the development of battery technology, apart from improvement to the performance of the battery, the safety is also non-negligible because the battery cannot be used unless the safety is guaranteed. Thus, how to enhance the safety of the battery is a technical problem to be solved urgently in the battery technology.

US 2020/313171 A1 discloses an electrode assembly, comprising a positive electrode and a negative electrode which are stacked and an electrode edge portion that is configured in such a way that a capacity per unit area of an electrode edge portion is smaller than that of the electrode body portion.

### SUMMARY OF THE INVENTION

The application provides an electrode assembly and a manufacturing method therefor, a battery cell and a battery, which may enhance safety of the battery.

In a fist aspect, the embodiment of the application provides the electrode assembly according to appended claims 1-10.

When the negative active material layer includes the negative body portion and the negative edge portion, then the negative edge portion includes a first portion overlapping the positive active material layer in a stacking direction and a second portion extending beyond the positive active material layer. When the capacity per unit area of the negative body portion meets a setting requirement, that is, the capacity per unit area of the negative body portion reaches a first preset value, lithium plating is less likely to occur on the negative body portion. Since the capacity per unit area of the negative edge portion is greater than that of the negative body portion, that is, the capacity per unit area of the negative edge portion is greater than the first preset value, equivalently, the capacity per unit area of the negative edge portion is increased, a cell balance (CB) value of the negative edge portion may be increased. During cycle, even if the first portion needs to receive lithium ions separating from the positive active material layer and lithium ions diffusing from the second portion, lithium plating is less likely to occur on the first portion, thereby reducing a risk of lithium plating of the negative edge portion.

When the positive active material layer includes the positive body portion and the positive edge portion, then a portion, overlapping the positive edge portion, of the negative active material layer and a portion, extending beyond the positive active material layer, of the negative active material layer are connected. When the capacity per unit area of the positive body portion meets a setting requirement, that is, the capacity per unit area of the positive body portion reaches a second preset value, lithium plating is less likely to occur on the portion, overlapping the positive body portion, of the negative active material layer. Since the capacity per unit area of the positive edge portion is smaller than that of the positive body portion, that is, the capacity per unit area of the positive edge portion is smaller than the second preset value, equivalently, the capacity per unit area of the positive edge portion is reduced, a cell balance (CB) value of the portion, overlapping the positive edge portion, of the negative active material layer may be increased. During cycle, even if the portion, overlapping the positive edge portion, of the negative active material layer needs to receive lithium ions diffusing from the portion, extending beyond the positive active material layer, of the negative active material layer, lithium plating is less likely to occur on the portion, overlapping the positive edge portion, of the negative active material layer.

According to the invention, a weight ratio of an active material in the negative edge portion to the negative edge portion is greater than that of an active material in the negative body portion to the negative body portion, such that the capacity per unit area of the negative edge portion is greater than that of the negative body portion. By adding the active material in the negative edge portion, the weight ratio of the active material in the negative edge portion is increased, and the capacity per unit area of the negative edge portion is increased, such that the capacity per unit area of the negative edge portion is greater than that of the negative body portion.

In some embodiments, per gram capacity of the active material in the negative edge portion is greater than that of the active material in the negative body portion. By increasing the gram capacity of the active material in the negative edge portion, the capacity per unit area of the negative edge portion may be increased, such that the capacity per unit area of the negative edge portion is greater than that of the negative body portion.

In some embodiments, the negative edge portion includes a first negative coating and a second negative coating which are stacked in the stacking direction. A weight ratio of an active material in the second negative coating to the second negative coating is greater than that of an active material in the first negative coating to the first negative coating. By adding the active material in the second negative coating, the weight ratio of the active material in the second negative coating is increased, and then the capacity per unit area of the negative edge portion is increased, such that the capacity per unit area of the negative edge portion is greater than that of the negative body portion. In another embodiment, the gram capacity of the active material in the second negative coating is greater than that of the active material in the first negative coating. By of increasing the gram capacity of the active material in the second negative coating, the capacity per unit area of the negative edge portion is increased, such that the capacity per unit area of the negative edge portion is greater than that of the negative body portion.

In some embodiments, a particle size of the active material in the negative edge portion is smaller than that of the active material in the negative body portion. During charge and discharge, the lithium ions are likely to diffuse in the negative edge portion, are distributed in the negative edge portion more uniformly, and are less likely to locally gather in the negative edge portion, thereby reducing the risk of lithium plating.

In some embodiments, the negative pole piece includes a negative current collector including a negative coating region and a negative tab, the negative coating region being coated with at least part of the negative active material layer, the negative tab being connected to an end, in a first direction, of the negative coating region, and the first direction being perpendicular to the stacking direction. At least two negative edge portions are positioned on two sides, in the first direction, of the negative body portion respectively. By means of the two negative edge portions, lithium plating is less likely to occur on the negative active material layer.

In some embodiments, in the two negative edge portions, a thickness of at least part of the negative edge portion close to the negative tab is smaller than that of the negative body portion, and a thickness of the negative edge portion far away from the negative tab is equal to that of the negative body portion.

In some embodiments, a size of the portion, overlapping the positive active material layer in the stacking direction, of the negative edge portion is greater than 0.5 mm in the first direction, so as to reduce the risk of lithium plating of the negative active material layer.

In some embodiments, the negative edge portion is arranged around the negative body portion. In this way, a range of the negative edge portion may be expanded, and lithium plating is less likely to occur on the negative active material layer.

According to the invention, a weight ratio of an active material in the positive edge portion to the positive edge portion is smaller than that of an active material in the positive body portion to the positive body portion, such that the capacity per unit area of the positive edge portion is smaller than that of the positive body portion. By reducing the active material in the positive edge portion, the weight ratio of the active material in the positive edge portion is reduced, and the capacity per unit area of the positive edge portion is reduced, such that the capacity per unit area of the positive edge portion is smaller than that of the positive body portion.

In some embodiments, per gram capacity of the active material in the positive edge portion is smaller than that of the active material in the positive body portion. By reducing the gram capacity of the active material in the positive edge portion, the capacity per unit area of the positive edge portion may be reduced, such that the capacity per unit area of the positive edge portion is smaller than that of the positive body portion.

In some embodiments, the positive edge portion includes a first positive coating and a second positive coating which are stacked in the stacking direction. A weight ratio of an active material in the second positive coating to the second positive coating is smaller than that of an active material in the first positive coating to the first positive coating. By reducing the active material in the second positive coating, the weight ratio of the active material in the second positive coating is reduced, and then the capacity per unit area of the positive edge portion is reduced, such that the capacity per unit area of the positive edge portion is smaller than that of the positive body portion. In some other embodiments, the gram capacity of the active material in the second positive coating is smaller than that of the active material in the first positive coating. By reducing the gram capacity of the active material in the second positive coating, the capacity per unit area of the positive edge portion is reduced, such that the capacity per unit area of the positive edge portion is smaller than that of the positive body portion.

In some embodiments, a particle size of the active material in the positive edge portion is greater than that of the active material in the positive body portion. During charge and discharge, the lithium ions are less likely to diffuse in the positive edge portion, a rate of the lithium ions in the positive body portion diffusing into the positive edge portion is reduced, and a rate of the lithium ions separating from the positive edge portion is also reduced, such that a risk that the lithium ions gather in the portion, overlapping the positive edge portion, of the negative active material layer may be reduced, and lithium plating is less likely to occur on the negative active material layer.

In some embodiments, the positive pole piece includes a positive current collector including a positive coating region and a positive tab, the positive coating region being coated with at least part of the positive active material layer, the positive tab being connected to an end, in the first direction, of the positive coating region, and the first direction being perpendicular to the stacking direction. At least two positive edge portions are positioned on two sides, in the first direction, of the positive body portion respectively. By means of the two positive edge portions, lithium plating is less likely to occur on the positive active material layer.

In some embodiments, in the two positive edge portions, a thickness of at least part of the positive edge portion close to the positive tab is smaller than that of the positive body portion, and a thickness of the positive edge portion far away from the positive tab is equal to that of the positive body portion.

In some embodiments, the size of the positive edge portion is greater than 0.5 mm in the first direction. In this way, the risk of lithium plating of the portion, overlapping the positive body portion, of the negative active material layer may be reduced.

In some embodiments, the first positive edge portion is arranged around the positive body portion. In this way, the portion, overlapping the positive edge portion, of the negative active material layer may be expanded, and lithium plating is less likely to occur on the negative active material layer.

In a second aspect, the embodiment of the application provides the battery cell including a case and the electrode assembly provided in any embodiment of the first aspect, the electrode assembly being accommodated in the case.

In a third aspect, the embodiment of the application provides a battery including a box and the battery cell provided in any embodiment of the second aspect, the battery cell being accommodated in the box.

In a fourth aspect, the embodiments of the application provide an electric apparatus including the battery provided in any embodiment of the third aspect, the battery being used for supplying electrical energy.

The application also provides a manufacturing method for an electrode assembly, according to appended claim 11.

### BRIEF DESCRIPTION OF THE DRAWINGS

In order to describe the technical solutions in the embodiments of the application more clearly, the accompanying drawings required for describing the embodiments are briefly described below. Obviously, the accompanying drawings in the following description show merely some embodiments of the present disclosure, and a person of ordinary skill in the art would also be able to derive other accompanying drawings from these accompanying drawings without creative efforts.
Fig. 1 is a structural schematic diagram of a vehicle provided in some embodiments of the application;
Fig. 2 is an exploded view of a battery provided in some embodiments of the application;
Fig. 3 is a structural schematic diagram of a battery module shown in Fig. 2;
Fig. 4 is an exploded view of a battery cell shown in Fig. 3;
Fig. 5 is a structural schematic diagram of an electrode assembly in one embodiment of the application;
Fig. 6 is a partial section view made of the electrode assembly shown in Fig. 5 along line A-A;
Fig. 7 is a schematic diagram of a positive pole piece and a negative pole piece, in an unfolded state, shown in Fig. 5;
Fig. 8 is a structural schematic diagram of an electrode assembly in another embodiment of the application;
Fig. 9 is a structural schematic diagram of a positive pole piece and a negative pole piece of the electrode assembly shown in Fig. 8;
Figs. 10-14 are schematic diagrams of lithium ions migrating between the positive pole piece and the negative pole piece;
Fig. 15 is a partial section view of an electrode assembly in one embodiment of the application;
Fig. 16 is a partial section view of an electrode assembly in another embodiment of the application;
Fig. 17 is a partial section view of an electrode assembly in yet another embodiment of the application;
Fig. 18 is a partial section view of an electrode assembly in yet another embodiment of the application;
Fig. 19 is a partial section view of an electrode assembly in yet another embodiment of the application;
Fig. 20 is a schematic diagram of a top view of a negative pole piece of the electrode assembly in one embodiment of the application;
Fig. 21 is a schematic diagram of a top view of a positive pole piece of the electrode assembly in one embodiment of the application;
Fig. 22 is a schematic flowchart of a manufacturing method for an electrode assembly provided in some embodiments of the application;
Fig. 23 is a schematic block diagram of a manufacturing system for an electrode assembly provided in some embodiments of the application.

In the drawings, the components are not drawn to actual scale.

### SPECIFIC EMBODIMENTS

To make the objectives, technical solutions, and advantages of the embodiments of the application clearer, the following will clearly describe the technical solutions in the embodiments of the application with reference to the accompanying drawings in the embodiments of the application. Apparently, the described embodiments are some rather than all of the embodiments of the application. Based on the embodiments of the application, all other embodiments obtained by those of ordinary skill in the art without making creative efforts fall within the scope of protection of the application.

Unless otherwise defined, all technical and scientific terms used in the application have the same meanings as those commonly understood by those who belong to the technical field of the present application. In the application, the terms used in the specification of the application are merely for the purpose of describing specific embodiments, and are not intended to limit the application. The terms "including" and "having" and any variations thereof in the specification and claims of the application and the above accompanying drawings are intended to cover non-exclusive inclusion. The terms "first", "second", etc. in the specification and claims of the application or the above accompanying drawings are used to distinguish different objects, but not to describe a specific order or primary and secondary relationship.

Reference to an "embodiment" in the application means that a specific feature, structure or characteristic described in conjunction with an embodiment may be included in at least one embodiment of the application. The appearance of this phrase in various places in the specification does not necessarily mean the same embodiment, nor is it an independent or alternative embodiment mutually exclusive with other embodiments.

In the description of the application, it should be noted that, unless otherwise explicitly specified and defined, the terms "mounting", "connecting", "connection" and "attachment" should be understood in a broad sense, for example, they may be a fixed connection, a detachable connection, or an integrated connection; and may be a direct connection, or an indirect connection via an intermediate medium, or communication inside two elements. For those of ordinary skill in the art, the specific meanings of the above terms in the application could be understood according to specific circumstances.

As used herein, the term "and/or" is merely used to describe an associated relationship between associated objects and means three relationships, for example, A and/or B may mean A alone, A and B together, and B alone. In addition, the character "/" in the application generally indicates that the associated objects are an "or" relationship.

In the embodiments of the application, the same reference numerals refer to same components, and for the sake of brevity, detailed descriptions of the same components are omitted in different embodiments. It should be understood that a thickness, a length, a width and other dimensions of various components and an overall thickness, length, width and other dimensions of an integrated device shown in the accompanying drawings in the embodiments of the application are merely exemplary, and should not constitute any limitation on the application.

The term "plurality" in the application means two or more.

In the application, battery cells may include a lithium ion secondary battery cell, a lithium ion primary battery cell, a lithium-sulfur battery, a sodium lithium-ion battery cell, a sodium ion battery cell, a magnesium ion battery cell, etc., which are not limited by the embodiments of the application. The battery cell may be in cylindrical, flat, cuboid or other shapes, which is not limited by the embodiments of the application. Generally, the battery cells are divided into three types according to packaging manners: cylindrical battery cells, square battery cells and pouch battery cells, which are not limited by the embodiments of the application.

The battery mentioned in the embodiments of the application refers to a single physical module which includes one or a plurality of battery cells and therefore provides a higher voltage and capacity. For example, the battery mentioned in the application may include a battery module or a battery pack, etc. Generally, the battery includes a box for packaging one or a plurality of battery cells. The box may prevent liquid or other foreign matter from affecting charging or discharging of the battery cell.

The battery cell includes an electrode assembly and an electrolyte, the electrode assembly being composed of a positive pole piece, a negative pole piece and a separator film. The battery cell works mainly depending on movement of metal ions between the positive pole piece and the negative pole piece. The positive pole piece includes a positive current collector and a positive active material layer, a surface of the positive current collector is coated with the positive active material layer, a portion, not coated with the positive active material layer, of the positive current collector protrudes out of a portion, coated with the positive active material layer, of the positive current collector, and the portion, not coated with the positive active material layer, of the positive current collector serves as a positive tab. With a lithium ion battery as an example, a positive current collector may be made from aluminum, and the positive active material may be lithium cobalt oxide, lithium iron phosphate, ternary lithium or lithium manganate, etc. The negative pole piece includes a negative current collector and a negative active material layer, a surface of the negative current collector is coated with the negative active material layer, a portion, not coated with the negative active material layer, of the negative current collector protrudes out of a portion, coated with the negative active material layer, of the negative current collector, and the portion, not coated with the negative active material layer, of the negative current collector serves as a negative tab. The negative current collector may be made from copper, and the negative active material may be carbon, silicon, etc. In order to guarantee fusing does not occur during large current flow, a plurality of positive tabs are stacked together, and a plurality of negative tabs are stacked together. The separator film may be made from polypropylene (PP), polyethylene (PE), etc. In addition, the electrode assembly may be in a winding structure or a laminated structure, which is not limited in the embodiments of the application.

When the battery cell is charged by an external power source, electrons e on a positive electrode run to a negative electrode via an external circuit, lithium ions Li+ separate from active material particles in the positive active material layer and enter an electrode liquid, pass through micro pores on the separator film and move to the negative electrode, and are combined with electrons which have run over for a long time to enter active material particles in the negative active material layer. If the negative active material layer does not have space for the lithium ions, the lithium ions will be deposited on the surface of the negative active material layer to form lithium dendrites, so as to puncture the separator film, cause a short circuit in the battery cell, and cause thermal runaway. Thus, when the electrode assembly is designed, it is necessary to guarantee that the negative active material layer is excessive to reduce a risk of lithium plating.

In view of assembly accuracy of the electrode assembly, etc. an end of the negative active material lay needs to extend beyond the positive active material layer, so as to reduce a risk that the negative active material layer cannot completely cover the positive active material lay due to assembly errors. The negative active material layer has an overlapping region overlapping the positive active material layer and an overhang region extending beyond the positive active material layer. The inventors have found that the lithium ions may diffuse to and remain in the overhang region, especially if in a charged state, the lithium ions are stored for a long time, and by applying a small current for constant voltage discharge after discharge, the residual lithium ions in the overhung region can diffuse back to the overlapping region to play a role. However, diffusion of the lithium ions between the overlapping region and the overhang region will also cause the risk of lithium plating.

In view of this, the embodiment of the application provides an electrode assembly including a positive pole piece and a negative pole piece which are stacked, where a positive active material layer of the positive pole piece and a negative active material layer of the negative pole piece are arranged oppositely, and an end of the negative active material layer extends beyond the positive active material layer. The negative active material layer includes a negative body portion and a negative edge portion connected thereto, one end, away from the negative body portion, of the negative edge portion extends beyond the positive active material layer, in a stacking direction of the positive pole piece and the negative pole piece, at least part of the negative edge portion overlaps the positive active material layer, and the negative active material layer is configured in such a way that a capacity per unit area of the negative edge portion is greater than that of the negative body portion; and/or the positive active material layer includes a positive body portion and a positive edge portion connected thereto, and the positive edge portion is configured in such a way that a capacity per unit area of the positive edge portion is smaller than that of the positive body portion. This structure may reduce the risk of lithium plating and enhance safety of the battery.

The technical solution described in the embodiments of the application is applicable to a battery and an electric apparatus using the battery.

The electric apparatus may be a vehicle, a mobile phone, a portable device, a notebook computer, a ship, a spacecraft, an electric toy, an electric tool, etc. The vehicles may be fuel vehicles, gas vehicles or new energy vehicles, and the new energy vehicles may be battery electric vehicles, hybrid electric vehicles, extended-range vehicles, etc. The spacecrafts include airplanes, rockets, space shuttles, spaceships, etc. The electric toys include fixed or mobile electric toys, such as game machines, electric car toys, electric ship toys and electric airplane toys. The electric tools include metal cutting electric tools, electric grinding tools, electric assembling tools and electric tools for railways, such as electric drills, electric grinders, electric wrenches, electric screwdrivers, electric hammers, impact electric drills, concrete vibrators, electric planers, etc. The embodiments of the application do not make special restrictions on the above electric apparatuses.

In the following embodiments, the vehicle is taken as an example of the electric apparatus for the convenience of description.

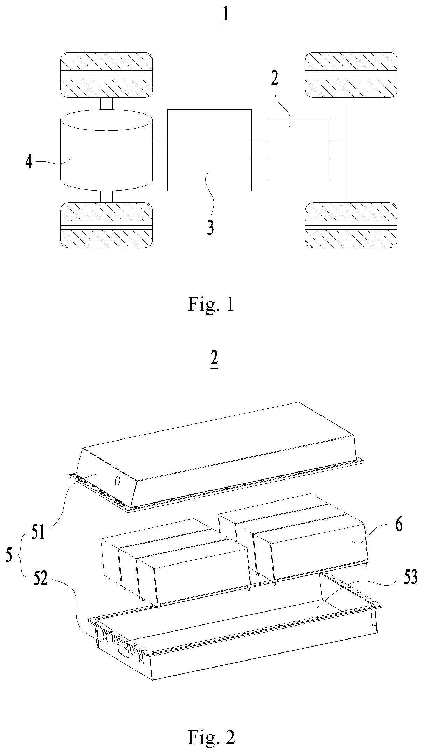

With reference to Fig. 1, Fig. 1 is a structural schematic diagram of a vehicle 1 provided in some embodiments of the application. A battery 2 is arranged inside the vehicle 1 and may be arranged at a bottom portion, a head portion or a tail portion of the vehicle 1. The battery 2 may be used for supplying electricity to the vehicle 1, for example, the battery 2 may be used as an operating power source for the vehicle 1.

The vehicle 1 may further include a controller 3 and a motor 4, where the controller 3 is used for controlling the battery 2 to supply electricity to the motor 4 to be used for, for example, operating electricity requirements during start-up, navigation and running of the vehicle 1.

In some embodiments of the application, the battery 2 may not only serve as the operating power source for the vehicle 1, but also serve as a driving power source for the vehicle 1, so as to replace or partially replace fuel or natural gas to provide driving power for the vehicle 1. With reference to Fig. 2, Fig. 2 is an exploded view of a battery 2 provided in some embodiments of the application. The battery 2 includes a box 5 and a battery cell (not shown in Fig. 2), the battery cell being accommodated in the box 5.

The box 5 is used for accommodating the battery cell and may be of various structures. In some embodiments, the box 5 may include a first box portion 51 and a second box portion 52, the first box portion 51 and the second box portion 52 may cover each other, and the first box portion 51 and the second box portion 52 define an accommodating space 53 for accommodating the battery cell together. The second box portion 52 may be of a hollow structure with an opening end, the first box portion 51 is of a plate-like structure, and the first box portion 51 covers an opening side of the second box portion 52 so as to form the box 5 with the accommodating space 53. The first box portion 51 and the second box portion 52 may be both of hollow structures with opening sides, and an opening side of the first box portion 51 covers the opening side of the second box portion 52 so as to form the box 5 with the accommodating space 53. Of course, the first box portion 51 and the second box portion 52 may be in various shapes, such as a cylinder or a cuboid.

In order to improve sealability after the first box portion 51 and the second box portion 52 are connected, a seal, such as a sealant or a seal ring, may be arranged between the first box portion 51 and the second box portion 52.

Assuming that the first box portion 51 covers a top portion of the second box portion 52, the first box portion 51 may also be referred to as an upper box cover, and the second box portion 52 may also be referred to as a lower box.

There may be one or more battery cells in the battery 2. If there are a plurality of battery cells, the plurality of battery cells may be connected in series, in parallel, or in a series-parallel manner. The plurality of battery cells may be directly connected in series, in parallel, or in a series-parallel manner, and then a whole formed by the plurality of battery cells is accommodated in the box 5. Of course, the plurality of battery cells may be connected in series, in parallel, or in a series-parallel manner first to form a battery module 6, and then a plurality of battery modules 6 are connected in series, in parallel, or in a series-parallel manner to form a whole to be accommodated in the box 5.

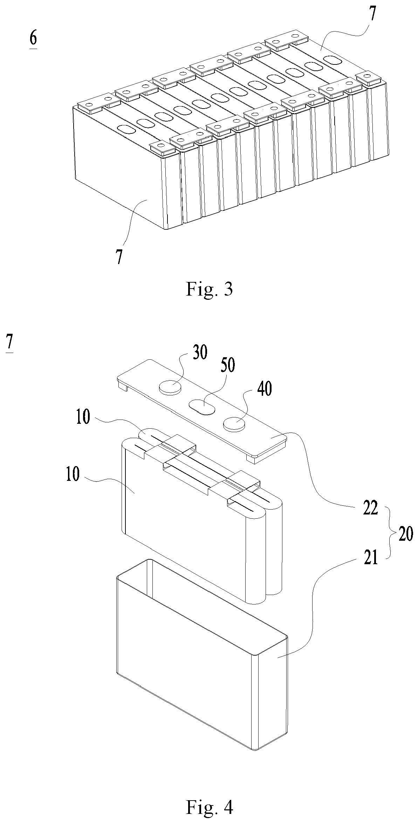

In some embodiments, with reference to Fig. 3, Fig. 3 is a structural schematic diagram of the battery module 6 shown in Fig. 2. The plurality of battery cells are connected in series, in parallel, or in a series-parallel manner first to form the battery module 6. The plurality of battery modules 6 are connected in series, in parallel, or in a series-parallel manner to form the whole to be accommodated in the box.

The plurality of battery cells 7 in the battery module 6 may be electrically connected to each other by means of bus components, so as to be connected in series, in parallel, or in a series-parallel manner.

With reference to Fig. 4, Fig. 4 is an exploded view of the battery cell 7 shown in Fig. 3. The battery cell 7 provided in the embodiment of the application includes an electrode assembly 10 and a case 20, the electrode assembly 10 being accommodated in the case 20.

In some embodiments, the case 20 may also be used for accommodating an electrolyte, such as an electrolytic solution. The case 20 may be of various structures.

In some embodiments, the case 20 may include a casing 21 and an end cover 22, the casing 21 is of a hollow structure with an opening side, and the end cover 22 covers an opening of the casing 21 to form a sealed connection, so as to form a sealed space for accommodating the electrode assembly 10 and the electrolyte.

When the battery cell 7 is assembled, the electrode assembly 10 may be placed in the casing 21 first, then the end cover 22 covers the opening of the casing 21, and the electrolyte is injected into the casing 21 by means of an electrolyte injection port in the end cover 22.

The casing 21 may be in various shapes, such as a cylinder or a cuboid. The shape of the casing 21 may be determined according to a specific shape of the electrode assembly 10. For example, if the electrode assembly 10 is of a cylindrical structure, a cylindrical casing may be selected and used. If the electrode assembly 10 is of a cuboid structure, a cuboid casing may be selected and used. Of course, the end cover 22 may also be of various structures, for example, the end cover 22 may be of a plate-like structure or a hollow structure with an opening end. Illustratively, in Fig. 4, the casing 21 is of a cuboid structure, the end cover 22 is of a plate-like structure, and the end cover 22 covers an opening at a top portion of the casing 21.

In some embodiments, the battery cell 7 may further include a positive electrode terminal 30, a negative terminal 40 and a pressure relief mechanism 50, all of which are arranged on the end cover 22. The positive terminal 30 and the negative terminal 40 are both used for being electrically connected to the electrode assembly 10, so as to output electrical energy generated by the electrode assembly 10. The pressure relief mechanism 50 is used for relieving a pressure inside the battery cell 7 when an internal pressure or temperature of the battery cell 7 reaches a predetermined value.

Illustratively, the pressure relief mechanism 50 is positioned between the positive electrode terminal 30 and the negative terminal 40 and may be components such as an explosion-proof valve, an explosion-proof sheet, an air valve, a pressure relief valve, or a safety valve.

Of course, in some embodiments, the case 20 may also be of other structures, for example, the case 20 includes the casing 21 and two end covers 22, the casing 21 is a hollow structure with two opposite opening sides, and one end cover 22 covers one opening of the casing 21 correspondingly to form a sealed connection, so as to form a sealed space for accommodating the electrode assembly 10 and the electrolyte. In this structure, the positive electrode terminal 30 and the negative electrode terminal 40 may be arranged on the same end cover 22, or may be arranged on different end covers 22. The pressure relief mechanism 50 may be arranged on one end cover 22, or the pressure relief mechanisms 50 may be arranged on both of the end covers 22.

It should be noted that in the battery cell 7, there may be one or more electrode assemblies 10 accommodated in the case 20. Illustratively, in Fig. 4, there are two electrode assemblies 10. Next, a specific structure of the electrode assembly 10 will be described in detail with reference to the accompanying drawings.

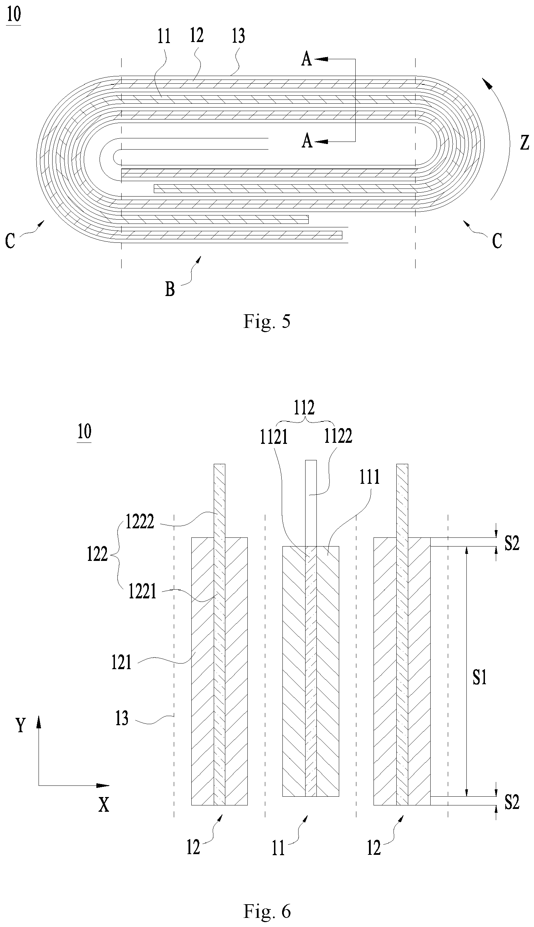

Fig. 5 is a structural schematic diagram of an electrode assembly in one embodiment of the application, and Fig. 6 is a partial section view made of the electrode assembly shown in Fig. 5 along line A-A.

As shown in Figs. 5 and 6, the electrode assembly 10 includes a positive pole piece 11 and a negative pole piece 12 which are stacked, a positive active material layer 111 of the positive pole piece 11 and a negative active material layer 121 of the negative pole piece 12 are arranged oppositely, and an end of the negative active material layer 121 extends beyond the positive active material layer 111. A region, overlapping the positive active material layer 111 in a stacking direction X, of the negative active material layer 121 is an overlapping region S1, and a region, extending beyond the positive active material layer 111, of the negative active material layer 121 is an overhang region S2.

In some embodiments, the positive pole piece 11 includes a positive current collector 112 and the positive active material layers 111 with which two surfaces of the positive current collector 112 are coated. The negative pole piece 12 includes a negative current collector 122 and the negative active material layers 121 with which two surfaces of the negative current collector 122 are coated. The positive current collector 112 includes a positive coating region 1121 and a positive tab 1122, positive coating region 1121 being coated with at least partial positive active material layer 111, the positive tab 1122 being connected to an end of the positive coating region 1121 and protruding out of the positive coating region 1121, and the positive tab 1122 being at least partially uncoated with the positive active material layer 111 and used for being electrically connected to the positive electrode terminal 30 (with reference to Fig. 4). The negative current collector 122 includes a negative coating region 1221 and a negative tab 1222, the negative coating region 1221 being coated with at least partial negative active material layer 121, the negative tab 1222 being connected to an end of the negative coating region 1221 and protruding out of the negative coating region 1221, and the negative tab 1222 being at least partially uncoated with the negative active material layer 121 and used for being electrically connected to the negative electrode terminal 40 (with reference to Fig. 4).

The electrode assembly 10 further includes a separator film 13 for separating the positive pole piece 11 from the negative pole piece 12. The separator film 13 is provided with a large number of through micropores, which can guarantee free passage of electrolyte ions and has good penetrability for lithium ions. The separator film 13 may be made of polypropylene (PP), polyethylene (PE), etc.

In some embodiments, the positive pole piece 11 and the negative pole piece 12 are wound around a winding axis to form a wound structure. In the wound structure, the positive pole piece 11 and the negative pole piece 12 are stacked in a direction perpendicular to the winding axis. In other words, the positive pole piece 11 and the negative pole piece 12 are wound in a plurality of turns in a winding direction Z, the winding direction Z being a direction in which the positive pole piece 11 and the negative pole piece 12 are circumferentially wound from the inside to the outside. In Fig. 5, the winding direction Z is counterclockwise.

In some embodiments, the positive tab 1122 is connected to an end, in a first direction Y, of the positive coating region 1121, and the negative tab 1222 is connected to an end, in the first direction Y, of the negative coating region 1221, the first direction Y being perpendicular to the winding direction Z and parallel to the winding axis of the electrode assembly 10.

In some embodiments, the positive tab 1122 and the negative tab 1222 are positioned on the same side, in the first direction Y, of the electrode assembly 10. In some other embodiments, the positive tab 1122 and the negative tab 1222 may also be positioned on two sides, in the first direction Y, of the electrode assembly 10.

The electrode assembly 10 with the wound structure includes a straight region B and bent regions C positioned at two ends of the straight region B. The straight region B is a region with a parallel structure in the wound structure, that is, the negative pole piece 12, the positive pole piece 11 and the separator film 13 in the flat region B are substantially parallel to each other, that is, a surface of each layer of the negative pole piece 12, the positive pole piece 11 and the separator film 13 of the electrode assembly 10 in the straight region B is planar. The bent region C is a region with a bent structure in the wound structure, that is, the negative pole piece 12, the positive pole piece 11 and the separator film 13 in the bent region C are all bent, that is, a surface of each layer of the negative pole piece 12, the positive pole piece 11 and the separator film 13 of the electrode assembly 10 in the bent region C is curved.

In some embodiments, an end of the negative active material layer 121 extends beyond the positive active material layer 111. Specifically, two ends, in the first direction Y, of the negative active material layer 121 extend beyond the positive active material layer 111, a start end, in the winding direction Z, of the negative active material layer 121 extends beyond the positive active material layer 111, and a tail end, in the winding direction Z, of the negative active material layer 121 extends beyond the positive active material layer 111. In this way, in the stacking direction X, the negative active material layer 121 may completely cover the positive active material layer 111, so as to reduce the risk of lithium plating.

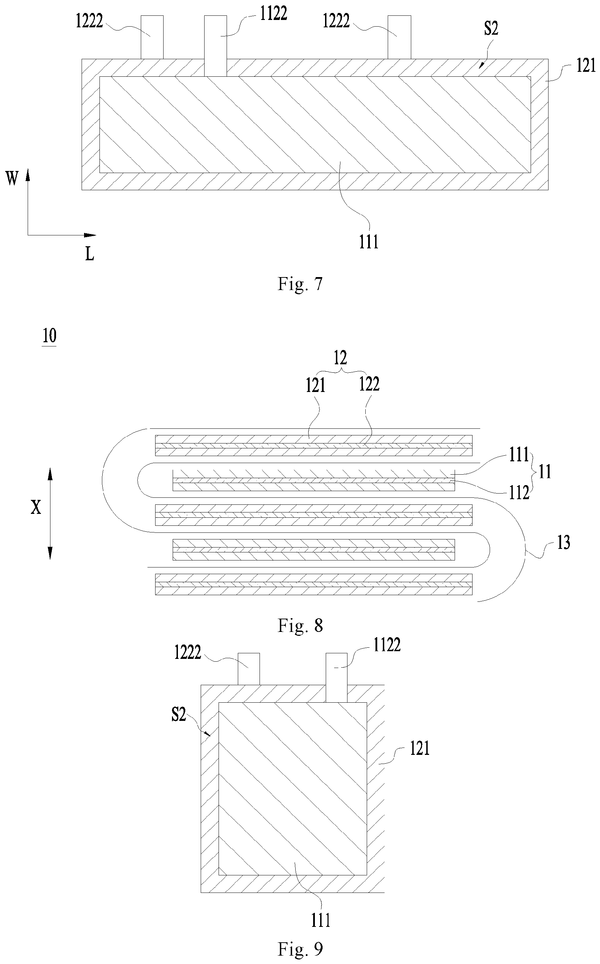

Fig. 7 is a schematic diagram of the positive pole piece 11 and the negative pole piece 12, in an unfolded state, shown in Fig. 5. As shown in Fig. 7, after the wound structure is unwound, the positive pole piece 11 and the negative pole piece 12 are substantially in long-strip shapes. In such a condition, the positive pole piece 11 and the negative pole piece 12 are stacked. In a length direction L of the negative pole piece 12, a length of the negative active material layer 121 is greater than that of the positive active material layer 111, and two ends of the negative active material layer 121 extend beyond the positive active material layer 111. In a width direction W of the negative pole piece 12, a width of the negative active material layer 121 is greater than that of the positive active material layer 111, and the two ends of the negative active material layer 121 extend beyond the positive active material layer 111.

Fig. 8 is a structural schematic diagram of an electrode assembly 10 in another embodiment of the application. Fig. 9 is a structural schematic diagram of the positive pole piece 11 and the negative pole piece 12 of the electrode assembly 10 shown in Fig. 8. As shown in Figs. 8 and 9, in some embodiments, the electrode assembly 10 includes a plurality of positive pole pieces 11 and a plurality of negative pole pieces 12, which are alternately stacked in the stacking direction X. The stacking direction X is parallel to a thickness direction of the positive pole piece 11 and a thickness direction of the negative pole piece 12. The positive pole piece 11 and the negative pole piece 12 are both substantially in flat-plate shapes.

In a direction perpendicular to the stacking direction X, an end of the negative active material layer 121 extends beyond the positive active material layer 111. In some embodiments, the negative active material layer 121 and the positive active material layer 111 are both substantially rectangular. In the length direction of the negative active material layer 121, two ends of the negative active material layer 121 extend beyond the positive active material layer 111. In the width direction of the negative active material layer 121, two ends of the negative active material layer 121 extend beyond the positive active material layer 111.

Through research, the inventors have found that the overhang region may cause the risk of lithium plating.

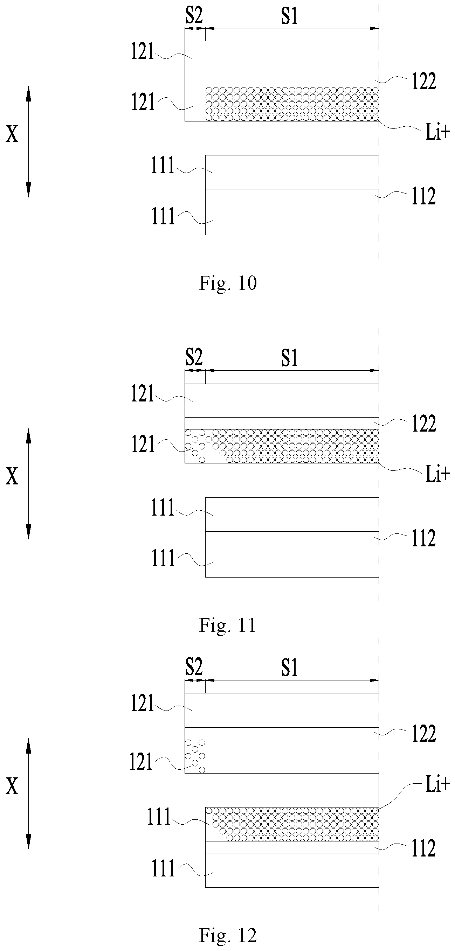

Specifically, Figs. 10-14 are schematic diagrams of lithium ions migrating between the positive pole piece 11 and the negative pole piece 12. As shown in Fig. 10, the negative active material layer 121 includes an overlapping region S1 and an overhang region S2, the overlapping region S1 overlapping the positive active material layer 111 in the stacking direction X, and the overhang region S2 being a region, extending beyond the positive active material layer 111, of the negative active material layer 121. During charge, lithium ions Li+ separate from the positive active material layer 111 and are embedded into the overlapping region S1, and as shown in Fig. 10, the lithium ions are substantially embedded into the overlapping region S1 in the fully charged state.

During self-discharge standing after charge, the lithium ions self-diffuse and are distributed in the negative active material layer 121 relatively uniformly, where the negative active material layer 121 includes the overhang region S2, that is, as shown in Fig. 11, some of the lithium ions diffuse from the overlapping region S1 to the overhang region S2. Especially, the lithium ions are stored for a long time if in the charged state more obviously.

After discharge for a period of time, as shown in Fig. 12, the lithium ions separate from the overlapping region S1 and are embedded in the positive active material layer 111.

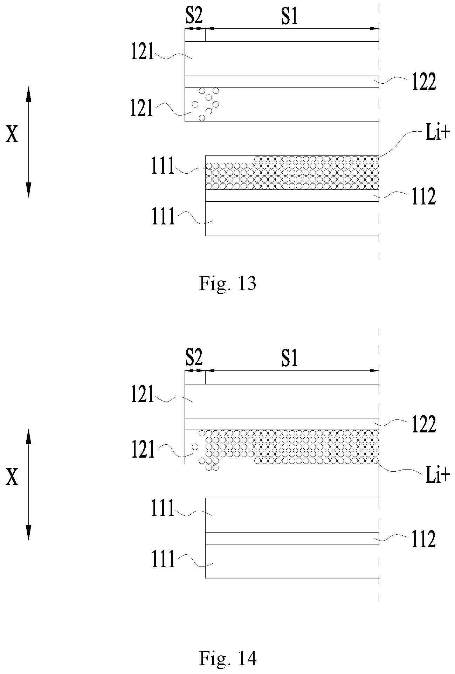

A diffusion rate of the lithium ions in the positive active material layer 111 is greater than that of the lithium ions in the negative active material layer 121. After standing for a period of time, as shown in Fig. 13, the lithium ions in the positive active material layer 111 diffuse to be distributed in the positive active material layer 111 uniformly. However, since the diffusion rate of the lithium ions in the negative active material layer 121 is relatively low, the lithium ions in the overhang region S2 only diffuse to a portion, close to the overhang region S2, of the overlapping region S1.

During recharge, the lithium ions in the positive active material layer 111 separate from the positive active material layer 111 and are embedded in the overlapping region S1. The portion, close to the overhang region S2, of the overlapping region S1 receives the lithium ions diffusing from the overhang region S2 and the lithium ions separating from the positive active material layer 111. As shown in Fig. 14, after a plurality of charge and discharge cycles, the portion, close to the overhang region S2, of the overlapping region S1 may not completely receive the lithium ions, thereby causing the risk of lithium plating.

In view of this, the inventors have made further improvements in a structure of the electrode assembly 10.

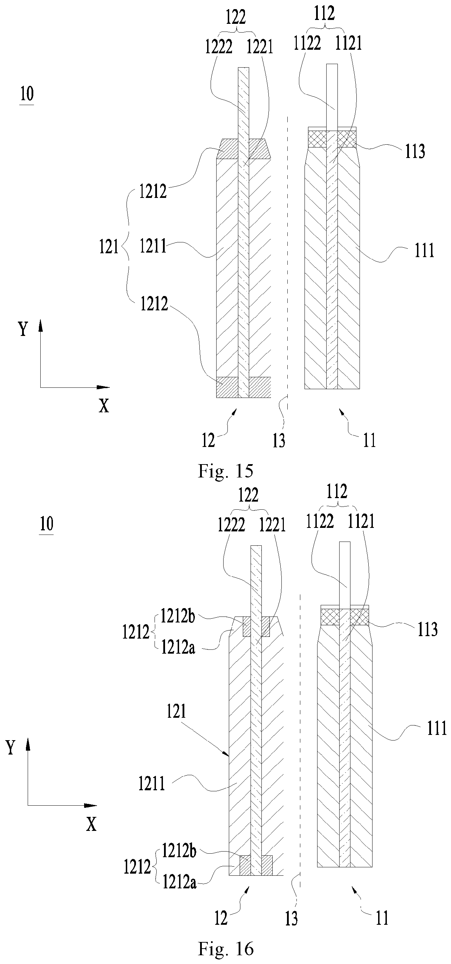

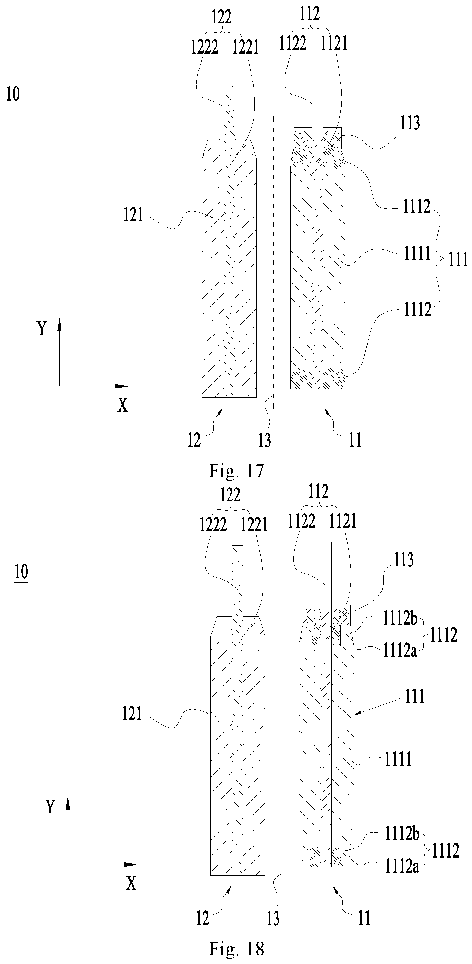

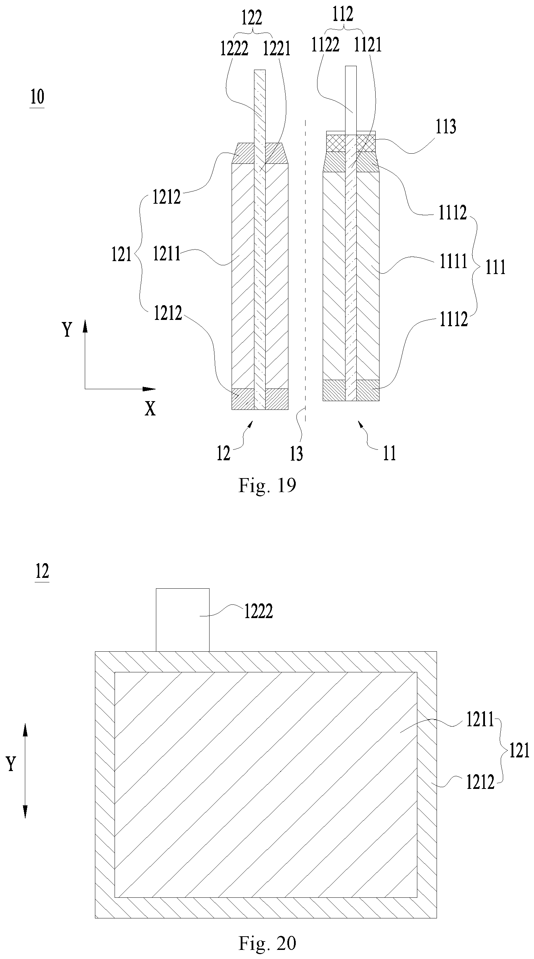

Fig. 15 is a partial section view of an electrode assembly 10 in one embodiment of the application, Fig. 16 is a partial section view of an electrode assembly 10 in another embodiment of the application, Fig. 17 is a partial section view of an electrode assembly 10 in yet another embodiment of the application, Fig. 18 is a partial section view of an electrode assembly 10 in yet another embodiment of the application, and Fig. 19 is a partial section view of an electrode assembly 10 in yet another embodiment of the application.

As shown in Figs 15-19, in some embodiments, the negative active material layer 12 includes a negative body portion 1211 and a negative edge portion 1212 connected thereto, one end, away from the negative body portion 1211, of the negative edge portion 1212 extends beyond the positive active material layer 111, in a stacking direction of the positive pole piece 11 and the negative pole piece 12, at least part of the negative edge portion 1212 overlaps the positive active material layer 111, and the negative active material layer 121 is configured in such a way that a capacity per unit area of the negative edge portion 1212 is greater than that of the negative body portion 1211; and/or the positive active material layer 111 includes a positive body portion 111 and a positive edge portion 1111 connected thereto, and the positive edge portion 1112 is configured in such a way that a capacity per unit area of the positive edge portion 1112 is smaller than that of the positive body portion 1111.

If the negative active material layer 121 includes the negative body portion 1211 and the negative edge portion 1212, then the negative edge portion 1212 includes a first portion overlapping the positive active material layer 111 in the stacking direction X and a second portion extending beyond the positive active material layer 111 (that is, the second portion is at least part of the overhang region). When the capacity per unit area of the negative body portion 1211 meets a setting requirement, that is, the capacity per unit area of the negative body portion 1211 reaches a first preset value, lithium plating is less likely to occur on the negative body portion 1211. Since the capacity per unit area of the negative edge portion 1212 is greater than that of the negative body portion 1211, that is, the capacity per unit area of the negative edge portion 1212 is greater than the first preset value, equivalently, the capacity per unit area of the negative edge portion 1212 is increased such that a cell balance (CB) value of the negative edge portion 1212 may be increased. During cycle, even if the first portion needs to receive lithium ions separating from the positive active material layer 111 and lithium ions diffusing from the second portion, lithium plating is less likely to occur on the first portion, thereby reducing a risk of lithium plating of the negative edge portion 1212.

If the positive active material layer 111 includes the positive body portion 1111 and the positive edge portion 1112, then a portion, overlapping the positive edge portion 1112, of the negative active material layer 121 and a portion, extending beyond the positive active material layer 111, of the negative active material layer 121 are connected. When the capacity per unit area of the positive body portion 1111 meets a setting requirement, that is, the capacity per unit area of the positive body portion 1111 reaches a second preset value, lithium plating is less likely to occur on the portion, overlapping the positive body portion 1111, of the negative active material layer 121. Since the capacity per unit area of the positive edge portion 1112 is smaller than that of the positive body portion 1111, that is, the capacity per unit area of the positive edge portion 1112 is smaller than the second preset value, equivalently, the capacity per unit area of the positive edge portion 1112 is reduced such that a cell balance (CB) value of the portion, overlapping the positive edge portion 1112, of the negative active material layer 121 is increased. During cycle, even if the portion, overlapping the positive edge portion 1112, of the negative active material layer 121 needs to receive lithium ions diffusing from the portion, extending beyond the positive active material layer 111, of the negative active material layer 121, lithium plating is less likely to occur on the portion, overlapping the positive edge portion 1112, of the negative active material layer 121.

The cell balance (CB) value is a ratio of the capacity per unit area of the negative active material layer 121 to that of the positive active material layer 111. For example, if the negative active material layer 121 includes the negative body portion 1211 and the negative edge portion 1212, the CB value of the negative body portion 1211 equals Q1/Q2, the CB value of the negative edge portion 1212 equals Q3/Q4, the capacity per unit area of the negative body portion 1211 is Q1, the capacity per unit area of the portion, overlapping the negative body portion 1211, of the positive active material layer 111 is Q2, the capacity per unit area of the negative edge portion 1212 is Q3, and the capacity per unit area of the portion, overlapping the negative edge portion 1212, of the positive active material layer 111 is Q4. For another example, when the positive active material layer 111 includes the positive body portion 1111 and the positive edge portion 1112, the CB value of the portion, overlapping the positive body portion 1111, of the negative active material layer 121 equals Q5/Q6, and the CB value of the portion, overlapping the positive edge portion 1112, of the negative active material layer 121 equals Q7/Q8, where the capacity per unit area of the portion, overlapping the positive body portion 1111, of the negative active material layer 121 is Q5, the capacity per unit area of the positive body portion 1111 is Q6, the capacity per unit area of the portion, overlapping the positive edge portion 1112, of the negative active material layer 121 is Q7, and the capacity per unit area of the positive edge portion 1112 is Q8.

If the negative active material layer 121 includes the negative body portion 1211 and the negative edge portion 1212, the negative edge portion 1212 is arranged along an edge of the negative active material layer 121, and an end, away from the negative body portion 1211, of the negative edge portion 1212 is a free end of the negative active material layer 121. If the positive active material layer 111 includes the positive body portion 1111 and the positive edge portion 1112, the positive edge portion 1112 is arranged along an edge of the positive active material layer 111, and an end, away from the positive body portion 1111, of the positive edge portion 1112 is a free end of the positive active material layer 111.

In the embodiments of the application, the negative active material layers 121 are provided on two sides of the negative current collector 122, the negative active material layer 121 described in the application is the negative active material layer 121 on one side, and the capacity per unit area of the negative active material layer 121 is the capacity per unit area of the negative active material layer 121 on one side of the negative pole piece 12. Similarly, the positive active material layers 111 are provided on two sides of the positive current collector 112, the positive active material layer 111 described in the application is the positive active material layer 111 on one side, and the capacity per unit area of the positive active material layer 111 is the capacity per unit area of the positive active material layer 111 on one side of the positive pole piece 11. In the embodiments of the application, the capacity per unit area of the negative body portion 1211 is a ratio of an active material capacity of the negative body portion 1211 to an area of a portion, covered with the negative body portion 1211, of the negative current collector 122, and the capacity per unit area of the negative edge portion 1212 is a ratio of an active material capacity of the negative edge portion 1212 to an area of a portion, covered with the negative edge portion 1212, of the negative current collector 122. Similarly, the capacity per unit area of the positive body portion 1111 is a ratio of an active material capacity of the positive body portion 1111 to an area of a portion, covered with the positive body portion 1111, of the positive current collector 112, and the capacity per unit area of the positive edge portion 1112 is a ratio of the active material capacity of the positive edge portion 1112 to the area of a portion, covered with the positive edge portion 1112, of the positive current collector 112.

In some embodiments, as shown in Fig. 15, the negative active material layer 12 includes the negative body portion 1211 and the negative edge portion 1212 connected thereto, one end, away from the negative body portion 1211, of the negative edge portion 1212 extends beyond the positive active material layer 111, in a stacking direction of the positive pole piece 11 and the negative pole piece 12, at least part of the negative edge portion 1212 overlaps the positive active material layer 111, and the negative active material layer 121 is configured in such a way that the capacity per unit area of the negative edge portion 1212 is greater than that of the negative body portion 1211.

With the same thickness, all the portions, of the positive active material layer 111 feature the same capacity per unit area. Specifically, the positive active material layer 111 is entirely formed by performing coating with single active slurry.

In the case where the negative active material layer 121 is provided with the negative body portion 1211 and the negative edge portion 1212 which have different capacities per unit area, the positive active material layer 111 may be formed by performing coating with the single active slurry, so as to simplify a manufacturing process for the positive pole piece 11.

In the application, positions and the number of the negative edge portions 1212 may be set according to requirements.

In some embodiments, there is one negative edge portion 1212, and the negative edge portion 1212 is positioned at one side, in the first direction Y, of the negative body portion 1211, that is, the negative edge portion 1212 and the negative body portion 1211 are arranged in the first direction Y, and a size, in the first direction Y, of the negative edge portion 1212 is smaller than a size, in the first direction Y, of the negative body portion 1211. In some embodiments, the negative edge portion 1212 is positioned on a side, in the first direction Y away from the negative tab 1222, of the negative body portion 1211. In some embodiments, the negative edge portion 1212 and the negative body portion 1211 feature the same thickness.

In some other embodiments, at least two negative edge portions 1212 are positioned on two sides, in the first direction, of the negative body portion 1211 respectively. By means of the two negative edge portions 1212, lithium plating is less likely to occur on the negative active material layer 121.

In a forming process of the negative pole piece 12, the negative current collector 122 is coated with negative active slurry first, and then is rolled to form the negative active material layer 121. Due to fluidity and surface tension of the negative active slurry, after the negative active material layer 121 is formed, a thin layer region having a small thickness is formed at the end, close to the negative tab 1222, of the negative active material layer 121. In the embodiments of the application, the negative edge portion 1212 is arranged at one end, close to the negative tab 1222, of the negative active material layer 121. Even if the negative edge portion 1212 is thinned in the forming process, a requirement of the negative edge portion 1212 on the CB value may be satisfied, and the risk of lithium plating may be reduced. In this way, in the two negative edge portions 1212, a thickness of at least part of the negative edge portion 1212 close to the negative tab 1222 is smaller than that of the negative body portion 1211. In some embodiments, the thickness of the negative edge portion 1212 far away from the negative tab 1222 is equal to that of the negative body portion 1211.

In the forming process of the positive pole piece 11, the positive current collector 112 is coated with positive active slurry first and then is rolled to form the positive active material layer 111. Due to fluidity and surface tension of the positive active slurry, after the positive active material layer 111 is formed, a thin layer region having a small thickness is formed at the end, close to the positive tab 1122, of the positive active material layer 111.

In some embodiments, the positive pole piece 11 further includes an insulating layer 113, the positive electrode coating region 1121 is coated with part of the insulating layer 113, and a root portion, close to the positive coating region 1121, of the positive tab 1122 is coated with another part of the insulating layer 113. The insulating layer 113 may reduce burrs in a cutting process of the positive tab 1122, improve insulating performance of the positive tab 1122, and reduce a risk of electric connection between the root portion of the positive tab 1122 and the negative pole piece 12.

The lithium ions in the second portion may diffuse to the first portion, and if the size, in the first direction Y, of the first portion is too small, the lithium ions in the second portion may diffuse to the negative body portion 1211, and the capacity per unit area of the negative body portion 1211 is smaller than that of the first portion, such that the risk of the negative body portion 1211 is likely to occur. Therefore, in order to reduce the risk of lithium plating, in some embodiments, the size of the first portion is greater than 0.5 mm in the first direction Y, that is, the size of the portion, overlapping the positive active material layer 111 in the stacking direction X, of the negative edge portion 1212 is greater than 0.5 mm in the first direction Y. In the embodiments of the application, it can be achieved in a variety of ways that the capacity per unit area of the negative edge portion 1212 may be greater than that of the negative body portion 1211.

In some embodiments, a weight ratio of an active material in the negative edge portion 1212 to the negative edge portion 1212 is greater than that of an active material in the negative body portion 1211 to the negative body portion 1211, such that the capacity per unit area of the negative edge portion 1212 is greater than that of the negative body portion 1211. The negative edge portion 1212 and the negative body portion 1211 each include the active material, an adhesive and a conductive agent. By adding the active material in the negative edge portion 1212, the weight ratio of the active material in the negative edge portion 1212 is increased, and the capacity per unit area of the negative edge portion 1212 is increased, such that the capacity per unit area of the negative edge portion 1212 is greater than that of the negative body portion 1211.

In some examples, the weight ratio of the active material in the negative edge portion 1212 to the negative edge portion 1212 is greater than that of the active material in the negative body portion 1211 to the negative body portion 1211 by 0.5%-20%, optionally, 1.5%-12%. Optionally, the active material in the negative edge portion 1212 is the same as the active material in the negative body portion 1211. The active material in the negative edge portion 1212 and the active material in the negative body portion 1211 is the same and may be a compound of graphite, silicon, etc.

In the embodiment, the thickness of the negative edge portion 1212 may be set according to positions. For example, the thickness of the negative edge portion 1212 close to the negative tab 1222 is smaller than that of the negative body portion 1211, and the thickness of the negative edge portion 1212 far away from the negative tab 1222 is equal to that of the negative body portion 1211.

In other embodiments, per gram capacity of the active material in the negative edge portion 1212 is greater than that of the active material in the negative body portion 1211. By increasing the gram capacity of the active material in the negative edge portion 1212, the capacity per unit area of the negative edge portion 1212 may be increased such that the capacity per unit area of the negative edge portion 1212 is greater than that of the negative body portion 1211.

The gram capacity is a ratio of capacitance released by the active material to mass of the active material.

In the embodiment, the active material in the negative edge portion 1212 is different from that in the negative body portion 1211, for example, the active material in the negative edge portion 1212 is a compound of silicon, but the active material in the negative body portion 1211 is graphite.

Optionally, the gram capacity of the active material in the negative edge portion 1212 is greater than that of the active material in the negative body portion 1211 by 0.5%-20%. Illustratively, the gram capacity of the active material in the negative edge portion 1212 is greater than that of the active material in the negative body portion 1211 by 1.5%-12%.

Optionally, the weight ratio of the active material in the negative edge portion 1212 to the negative edge portion 1212 is equal to that of the active material in the negative body portion 1211 to the negative body portion 1211.

In the embodiment, the thickness of the negative edge portion 1212 may be set according to positions. For example, the thickness of the negative edge portion 1212 close to the negative tab 1222 is smaller than that of the negative body portion 1211, and the thickness of the negative edge portion 1212 far away from the negative tab 1222 is equal to that of the negative body portion 1211.

With reference to Fig. 16, in some embodiments, the negative edge portion 1212 includes a first negative coating 1212a and a second negative coating 1212b which are stacked in a stacking direction X. Optionally, the second negative coating 1212b is connected between the first negative coating 1212a and the negative current collector 122. The first negative coating 1212a and the second negative coating 1212b are both active coatings containing active materials.

In some embodiments, the active material in the first negative coating 1212a is the same as that in the negative body portion 1211. A weight ratio of the active material in the first negative coating 1212a to the first negative coating 1212a is equal to that of the active material in the negative body portion 1211 to the negative body portion 1211. Optionally, the first negative coating 1212a and the negative body portion 1211 feature the same component, that is, the first negative coating 1212a and the negative body portion 1211 may be formed of the same negative active slurry, which may simplify a manufacturing process for the negative pole piece 12.

In some embodiments, a weight ratio of active material in the second negative coating 1212b to the second negative coating 1212b is greater than that of active material in the first negative coating 1212a to the first negative coating 1212a. By adding the active material in the second negative coating 1212b, the weight ratio of the active material in the second negative coating 1212b is increased, and the capacity per unit area of the negative edge portion 1212 is increased, such that the capacity per unit area of the negative edge portion 1212 is greater than that of the negative body portion 1211.

Optionally, the active material in the second negative coating 1212b is the same as that in the first negative coating 1212a. The active material in the second negative coating 1212b and the active material in the first negative coating 1212a is the same and may be a compound of graphite, silicon, etc.

In the embodiment, the thickness of the negative edge portion 1212 may be set according to positions. For example, the thickness of the negative edge portion 1212 close to the negative tab 1222 is smaller than that of the negative body portion 1211, and the thickness of the negative edge portion 1212 far away from the negative tab 1222 is equal to that of the negative body portion 1211.

In other embodiments, per gram capacity of the active material in the second negative coating 1212b is greater than that of the active material in the first negative coating 1212a. By increasing the gram capacity of the active material in the second negative coating 1212b, the capacity per unit area of the negative edge portion 1212 is increased, such that the capacity per unit area of the negative edge portion 1212 is greater than that of the negative body portion 1211.

In the application, in addition to increase in the capacity per unit area of the negative edge portion 1212, the risk of lithium plating of the negative edge portion 1212 may be reduced by improving kinetic performance of the negative edge portion 1212. For example, the smaller the particle size of the active material is, the more likely the lithium ion is to diffuse, and the less likely the lithium ions are to locally gather. In some embodiments, the particle size of the active material in the negative edge portion 1212 is smaller than that of the active material in the negative body portion 1211. In this way, during charge and discharge, the lithium ions are likely to diffuse in the negative edge portion 1212, are distributed in the negative edge portion 1212 more uniformly, and are less likely to locally gather in the negative edge portion 1212, so as to reduce the risk of lithium plating.

With reference to Fig. 17, in some embodiments, the positive active material layer 111 includes the positive body portion 1111 and the positive edge portion 1212 connected thereto, and the positive edge portion 1212 is configured in such a way that a capacity per unit area of the positive edge portion 1112 is smaller than that of the positive body portion 1211. With the same thickness, all the portions of the negative active material layer 121 feature the same capacity per unit area. Specifically, the negative active material layer 121 is entirely formed by performing coating with single active slurry.

In the case where the positive active material layer 111 is provided with the positive body portion 1111 and the positive edge portion 1112 which feature different capacities per unit area, the negative active material layer 121 may be formed by performing coating with the single active slurry, so as to simplify a manufacturing process for the negative pole piece 12.

In the application, positions and the number of the positive edge portions 1112 may be set according to requirements.

In some embodiments, there is one positive edge portion 1112, and the positive edge portion 1112 is positioned at one side, in the first direction Y, of the positive body portion 1111, that is, the positive edge portion 1112 and the positive body portion 1111 are arranged in the first direction Y, and a size, in the first direction Y, of the positive edge portion 1112 is smaller than a size, in the first direction Y, of the positive body portion 1111. In some embodiments, the positive edge portion 1112 is positioned on a side, in the first direction Y away from the positive tab 1122, of the positive body portion 1111. In some embodiments, the positive edge portion 1112 and the positive body portion 1111 feature the same thickness.

In some other embodiments, at least two positive edge portions 1112 are positioned on two sides, in the first direction Y, of the positive body portion 1111. By means of the two positive edge portions 1112, lithium plating is less likely to occur on the positive active material layer 111.

In the two positive edge portions 1112, a thickness of at least part of the positive edge portion 1112 close to the positive tab 1122 is smaller than that of the positive body portion 1111. A portion, with a thickness smaller than that of the positive body portion 1111, of the positive edge portion 1112 is a thin layer region of the positive active material layer 111. In some embodiments, the thickness of the positive edge portion 1112 far away from the positive tab 1122 is equal to that of the positive body portion 1111.

The lithium ions in the portion, extending beyond the positive active material layer 111, of the negative active material layer 121 may diffuse into the portion, overlapping the positive edge portion 1112, of the negative active material. If the size, in the first direction Y, of the positive edge portion 1112 is too small, the size of the portion, overlapping the positive edge portion 1112, of the negative active material may also be too small in the first direction Y, then the lithium ions may diffuse to a portion, overlapping the positive body portion 1111, of the negative active material. Since the capacity per unit area of the positive body portion 1111 is greater than that of the positive edge portion 1112, lithium plating may occur in the portion, overlapping the positive body portion 1111, of the negative active material. Therefore, in order to reduce the risk of lithium plating, the size of the portion, overlapping the positive edge portion 1112, of the negative active material in the first direction Y is greater than 0.5 mm, that is, the size of the positive edge portion 1112 in the first direction Y is greater than 0.5 mm.

In the embodiments of the application, it can be achieved in a variety of ways that the capacity per unit area of the positive edge portion 1112 may be greater than that of the positive body portion 1111.

In some embodiments, a weight ratio of an active material in the positive edge portion 1112 to the positive edge portion 1112 is smaller than that of an active material in the positive body portion 1111 to the positive body portion 1111, such that the capacity per unit area of the positive edge portion 1112 is smaller than that of the positive body portion 1111. The positive edge portion 1112 and the positive body portion 1111 each include the active material, an adhesive and a conductive agent. By adding the active material in the positive edge portion 1112, the weight ratio of the active material in the positive edge portion 1112 is reduced, and the capacity per unit area of the positive edge portion 1112 is reduced, such that the capacity per unit area of the positive edge portion 1112 is smaller than that of the positive body portion 1111.

In some examples, the weight ratio of the active material in the positive edge portion 1112 to the positive edge portion 1112 is smaller than that of the active material in the positive body portion 1111 to the positive body portion 1111 by 0.5%-20%, optionally, 1.5%-12%. Optionally, the active material in the positive edge portion 1112 is the same as that in the positive body portion 1111. The active material in the positive edge portion 1112 is the same as that in the positive body portion 1111 and may be lithium iron phosphate, lithium manganate, ternary lithium, lithium cobaltate, etc.

In the embodiment, the thickness of the positive edge portion 1112 may be set according to positions. For example, the thickness of the positive edge portion 1112 close to the positive tab 1122 is smaller than that of the positive body portion 1111, and the thickness of the positive edge portion 1112 far away from the positive tab 1122 is equal to that of the positive body portion 1111.

In some other embodiments, per gram capacity of the active material in the positive edge portion 1112 is smaller than that of the active material in the positive body portion 1111. By increasing the gram capacity of the active material in the positive edge portion 1112, the capacity per unit area of the positive edge portion 1112 may be reduced, such that the capacity per unit area of the positive edge portion 1112 is smaller than that of the positive body portion 1111.

In the embodiment, the active material in the positive edge portion 1112 is different from that in the positive body portion 1111, for example, the active material in the positive edge portion 1112 is lithium iron phosphate, but the active material in the positive body portion 1111 is ternary lithium.

Optionally, the gram capacity of the active material in the positive edge portion 1112 is smaller than that of the active material in the positive body portion 1111 by 0.5%-20%. Illustratively, the gram capacity of the active material in the positive edge portion 1112 is smaller than that of the active material in the positive body portion 1111 by 1.5%-12%.

Optionally, the weight ratio of the active material in the positive edge portion 1112 to the positive edge portion 1112 is equal to that of the active material in the positive body portion 1111 to the positive body portion 1111.

In the embodiment, the thickness of the positive edge portion 1112 may be set according to positions. For example, the thickness of the positive edge portion 1112 close to the positive tab 1122 is smaller than that of the positive body portion 1111, and the thickness of the positive edge portion 1112 far away from the positive tab 1122 is equal to that of the positive body portion 1111.

With reference to Fig. 18, in some embodiments, the positive edge portion 1112 includes a first positive coating 1112a and a second positive coating 1112b which are stacked in the stacking direction X. Optionally, the second positive coating 1112b is connected between the first positive coating 1112a and the positive current collector 112.

In some embodiments, the active material in the first positive coating 1112a is the same as that in the positive body portion 1111. A weight ratio of the active material in the first positive coating 1112a to the first positive coating 1112a is equal to that of the active material in the positive body portion 1111 to the positive body portion 1111. Optionally, the first positive coating 1112a and the positive body portion 1111 feature the same components, that is, the first positive coating 1112a and the positive body portion 1111 may be formed of the same negative active slurry, which may simplify a manufacturing process for the positive pole piece 11.

The second positive coating 1112b may be a pure conductive coating, for example, the second positive coating 1112b may be a pure conductive coating composed of an adhesive and a conductive agent. The second positive coating 1112b may also be an active coating containing lithium ions, for example, the second positive coating 1112b is an active coating containing lithium ions and composed of a lithium-rich material, an adhesive and a conductive agent. The second positive coating 1112b may be an inactive coating containing lithium ions, for example, the second positive coating 1112b may be an inactive coating containing lithium ions composed of an adhesive, a conductive agent, and lithium powder coated with lithium carbonate.

In some embodiments, a weight ratio of active material in the second positive coating 1112b to the second positive coating 1112b is smaller than that of active material in the first positive coating 1112a to the first positive coating 1112a. By decreasing the active material in the second positive coating 1112b, the weight ratio of the active material in the second positive coating 1112b is reduced, and then the capacity per unit area of the positive edge portion 1112 is reduced, such that the capacity per unit area of the positive edge portion 1112 is smaller than that of the positive body portion 1111. Optionally, the second positive coating 1112b does not contain active material, that is, the weight ratio of the active material in the second positive coating 1112b to the second positive coating 1112b is 0.

In the embodiment, the thickness of the positive edge portion 1112 may be set according to positions. For example, the thickness of the positive edge portion 1112 close to the positive tab 1122 is smaller than that of the positive body portion 1111, and the thickness of the positive edge portion 1112 far away from the positive tab 1122 is equal to that of the positive body portion 1111.

In some other embodiments, per gram capacity of the active material in the second positive coating 1112b is smaller than that of the active material in the first positive coating 1112a. By reducing the gram capacity of the active material in the second positive coating 1112b, the capacity per unit area of the positive edge portion 1112 is reduced, such that the capacity per unit area of the positive edge portion 1112 is smaller than that of the positive body portion 1111. In the application, in addition to reduction in the capacity per unit area of the positive edge portion 1112, the risk of lithium plating of the negative active material layer 121 may be reduced by adjusting kinetic performance of the positive edge portion 1112. In some embodiments, a particle size of the active material in the positive edge portion 1112 is greater than that of the active material in the positive body portion 1111. In this way, during charge and discharge, lithium ions are less likely to diffuse in the positive edge portion 1112, a rate of the lithium ions in the positive body portion 1111 diffusing into the positive edge portion 1112 is reduced, and a rate of the lithium ions separating from the positive edge portion 1112 is also reduced such that a risk that the lithium ions gather in the portion, overlapping the positive edge portion 1112, of the negative active material layer 121 may be reduced, and lithium plating is less likely to occur on the negative active material layer 121.

In some embodiments, as shown in Fig. 19, the negative active material layer 12 includes the negative body portion 1211 and the negative edge portion 1212 connected thereto, one end, away from the negative body portion 1211, of the negative edge portion 1212 extends beyond the positive active material layer 111, in the stacking direction of the positive pole piece 11 and the negative pole piece 12, at least part of the negative edge portion 1212 overlaps the positive active material layer 111, and the negative active material layer 121 is configured in such a way that the capacity per unit area of the negative edge portion 1212 is greater than that of the negative body portion 1211. The positive active material layer 111 includes the positive body portion 1111 and the positive edge portion 1212 connected thereto, and the positive edge portion 1212 is configured in such a way that a capacity per unit area of the positive edge portion 1112 is smaller than that of the positive body portion 1211.

In the embodiments of the application, by increasing the weight ratio or the gram capacity of the active material in the negative edge portion 1212, etc., the capacity per unit area of the negative edge portion 1212 is greater than that of the negative body portion 1211. Similarly, by reducing the weight ratio or the gram capacity of the active material in the positive edge portion 1112, etc., the capacity per unit area of the positive edge portion 1112 is smaller than that of the positive body portion 1111.

In some embodiments, the positive edge portion 1112 and the negative edge portion 1212 at least partially overlap in the stacking direction X. In some embodiments, part of the positive edge portion 1112 and the negative body portion 1211 overlap in the stacking direction X. When the capacity per unit area of the negative body portion 1211 and the capacity per unit area of the positive body portion 1111 satisfy requirements, the capacity per unit area of the negative edge portion 1212 is greater than that of the negative body portion 1211, and the capacity per unit area of the positive edge portion 1112 is smaller than that of the positive body portion 1111. In this way, the CB value of the negative edge portion 1212 and the CB value of the portion, overlapping the positive edge portion 1112, of the negative body portion 1211 may be increased, and lithium plating is less likely to occur in the negative active material layer 121. Fig. 20 is a schematic diagram of a top view of the negative pole piece 12 of the electrode assembly 10 in one embodiment of the application. As shown in Fig. 20, in some embodiments, the negative edge portion 1212 is arranged around the negative body portion 1211 such that a range of the negative edge portion 1212 may be increased, and lithium plating is less likely to occur on the negative active material layer 121.

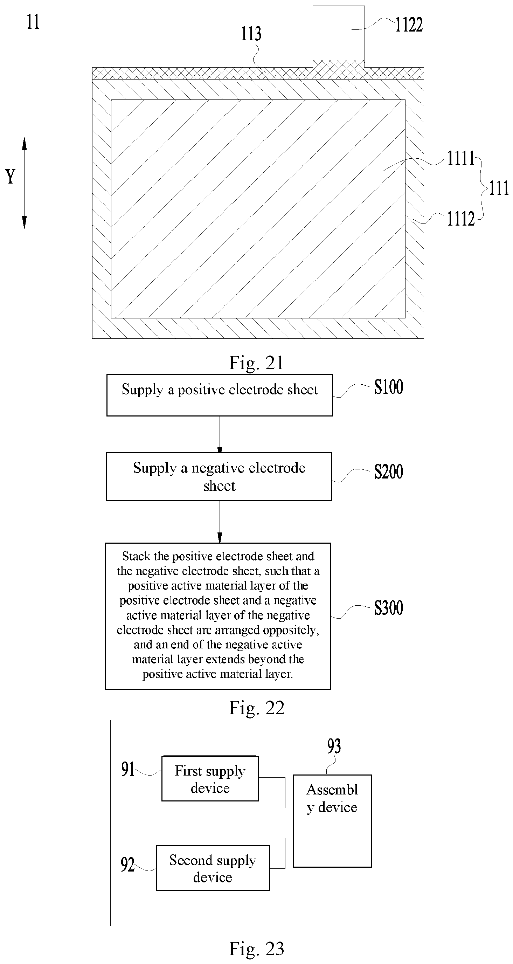

Fig. 21 is a schematic diagram of a top view of the positive pole piece 11 of the electrode assembly 10 in one embodiment of the application. As shown in Fig. 21, in some embodiments, the positive edge portion 1112 is arranged around the positive body portion 1111, such that the portion, overlapping the positive edge portion 1112, of the negative active material layer 121 may be expanded, and lithium plating is less likely to occur in the negative active material layer 121.

Test steps for the capacity per unit area and the CB value are as follow:
Step 1). Testing an average discharge capacity of a single-sided positive active material layer. The positive pole piece of each embodiment is taken, and a small wafer containing the single-sided positive active material layer is obtained by using a punching die. A metal lithium sheet is used as a counter electrode, a Celgard film is used as a separator film, and an ethylene carbonate + dimethyl carbonate + diethyl carbonate (EC+DMC+DEC with a volume ratio of 1: 1:1) solution with dissolved LiPF6 (1mol/L) is used as an electrolyte, and six identical CR2430 button batteries are assembled in an argon-protected glove box. (1) After a battery is assembled, standing is carried out for 12 h;(2) constant current charge is carried out under a charge current of 0.1 C until a voltage reaches an upper limit cut-off voltage x1 V, and then the voltage x1 V is kept for constant voltage charge until the current is 50 uA;(3) standing is carried out for 5 min;(4) finally constant current discharge is carried out under a discharge current of 0.1 C until the voltage reaches a lower limit cut-off voltage y1 V; and (5) standing is carried out for 5 min, steps 2-5 are repeated, and a discharge capacity of a second cycle is recorded. An average value of discharge capacities of the six button batteries is an average discharge capacity of the single-sided positive active material layer. For example, when a positive active material is lithium iron phosphate (LFP), the upper limit cut-off voltage x1 V = 3.75 V, and the lower limit cut-off voltage y1 V = 2 V. When the positive active material is a lithium nickel cobalt manganese oxide (NCM), the upper limit cut-off voltage x1 V = 4.25 V, and the lower limit cut-off voltage y1 V = 2.8 V. By taking an area of the small wafer containing the single-sided positive active material layer as a unit area, the average discharge capacity of the single-sided positive active material layer is the capacity per unit area of the single-sided positive active material layer.
Step 2). Testing an average charge capacity of a single-sided negative active material layer. A negative pole piece of each embodiment is taken, and a small wafer with the same area as that of the small positive wafer in step 1) and containing the single-sided negative active material layer is obtained by using the punching die. The metal lithium sheet is used as the counter electrode, the Celgard film is used as the separator film, and the ethylene carbonate + dimethyl carbonate + diethyl carbonate (EC+DMC+DEC with a volume ratio of 1: 1: 1) solution with dissolved LiPF6 (1mol/L) is used as the electrolyte, and the six CR2430 button batteries are assembled in the argon-protected glove box. (1) After the battery pack is assembled, standing is carried out for 12 h; (2) constant current discharge is carried out under a discharge current of 0.05 C until a voltage reaches a lower limit cut-off voltage y2 mV; (3) constant current discharge is carried out with a discharge current of 50 uA until the voltage reaches a lower limit cut-off voltage y2 mV; (4) standing is carried out for 5 min; (5) constant current discharge is carried out with a discharge current of 10 uA until the lower limit cut-off voltage y2 mV is reached; (6) standing is carried out for 5 min; (7) constant current charge is carried out under a charge current of 0.1 C until a final voltage reaches the upper limit cut-off voltage x2 V; and (8) standing is carried out for 5 minutes, steps 2-8 are repeated, and a charge capacity of a second cycle is recorded. The average charge capacity of the six button batteries is the average charge capacity of the single-sided negative active material layer. For example, when the negative active material is graphite, the upper limit cut-off voltage x2 V = 2 V and the lower limit cut-off voltage y2 V = 5 mV. When the negative active material is silicon, the upper limit cut-off voltage x2 V = 2 V and the lower limit cut-off voltage y2 V = 5 mV. By taking the area of the small wafer containing the single-sided negative active material layer as the unit area, the average charge capacity of the single-sided negative active material layer is the capacity per unit area of the single-sided negative active material layer.
Step 3). Calculating a Cell Balance (CB) value according to an equation: CB value = the average charge capacity (mAh) of the single-sided negative active material layer /the average discharge capacity (mAh) of the single-sided positive active material layer.

Fig. 22 is a schematic flowchart of a manufacturing method for an electrode assembly provided in some embodiments of the application. As shown in Fig. 22, in some embodiments, the manufacturing method for an electrode assembly includes:
S 100: providing a positive pole piece;
S200: providing a negative pole piece; and
S300: stacking the positive pole piece and the negative pole piece, such that a positive active material layer of the positive pole piece and a negative active material layer of the negative pole piece are arranged oppositely, and an end of the negative active material layer extends beyond the positive active material layer.

The negative active material layer includes a negative body portion and a negative edge portion connected thereto, one end, away from the negative body portion, of the negative edge portion extends beyond the positive active material layer, in a stacking direction of the positive pole piece and the negative pole piece, at least part of the negative edge portion overlaps the positive active material layer, and the negative active material layer is configured in such a way that a capacity per unit area of the negative edge portion is greater than that of the negative body portion; and/or the positive active material layer includes a positive body portion and a positive edge portion connected thereto, and the positive edge portion is configured in such a way that a capacity per unit area of the positive edge portion is smaller than that of the positive body portion.

It should be noted that for related structures of the electrode assembly manufactured by the above manufacturing method, it may refer to the electrode assembly provided in the above embodiments.

When the electrode assembly is assembled on the basis of the above-described manufacturing method for the electrode assembly, it is not necessary to perform the above-described steps sequentially, that is, the steps may be performed in the order mentioned in the embodiments, may be performed in a different order from that mentioned in the embodiments, or may be performed simultaneously. For example, steps S100 and S200 may be performed in no particular order, and may be performed simultaneously.

With reference to Fig. 23, Fig. 23 is a schematic block diagram of a manufacturing system for an electrode assembly provided in some embodiments of the application. The manufacturing system for an electrode assembly includes a first supply device 91 for supplying a positive pole piece; a second supply device 92 for supplying a negative pole piece; and an assembly device 93 for stacking the positive pole piece and the negative pole piece, such that a positive active material layer of the positive pole piece and a negative active material layer of the negative pole piece are arranged oppositely, and an end of the negative active material layer extends beyond the positive active material layer.

The negative active material layer includes a negative body portion and a negative edge portion connected thereto, one end, away from the negative body portion, of the negative edge portion extends beyond the positive active material layer, in a stacking direction of the positive pole piece and the negative pole piece, at least part of the negative edge portion overlaps the positive active material layer, and the negative active material layer is configured in such a way that a capacity per unit area of the negative edge portion is greater than that of the negative body portion; and/or the positive active material layer includes a positive body portion and a positive edge portion connected thereto, and the positive edge portion is configured in such a way that a capacity per unit area of the positive edge portion is smaller than that of the positive body portion.

In some embodiments, the manufacturing system further includes a third supply device (not shown) for supplying the separator film separating the positive pole piece from the negative pole piece. The assembly device is used for stacking the positive pole piece, the separator film and the negative pole piece.

For related structures of the electrode assembly manufactured by the above manufacturing system, it may refer to the electrode assembly provided in the above embodiments.

It should be noted that the embodiments in the application and features in the embodiments may be combined with one another if there is no conflict.

## Claims

1. An electrode assembly (10), comprising a positive pole piece (11) and a negative pole piece (12) which are stacked, **characterized in that** a positive active material layer (111) of the positive pole piece (11) and a negative active material layer (121) of the negative pole piece (12) are arranged oppositely, and an end of the negative active material layer (121) extends beyond the positive active material layer (111);
the negative active material layer (121) comprises a negative body portion (1211) and a negative edge portion (1212) connected thereto, one end, away from the negative body portion (1211), of the negative edge portion (1212) extends beyond the positive active material layer (111), in a stacking direction of the positive pole piece (11) and the negative pole piece (12), at least part of the negative edge portion (1212) overlaps the positive active material layer (111), and the negative active material layer (121) is configured in such a way that a capacity per unit area of the negative edge portion (1212) is greater than that of the negative body portion (1211); wherein a weight ratio of an active material in the negative edge portion (1212) to the negative edge portion (1212) is greater than that of an active material in the negative body portion (1211) to the negative body portion (1211), such that the capacity per unit area of the negative edge portion (1212) is greater than that of the negative body portion (1211);
and/or the positive active material layer (111) comprises a positive body portion (1111) and a positive edge portion (1112) connected thereto, and the positive edge portion (1112) is configured in such a way that a capacity per unit area of the positive edge portion (1112) is smaller than that of the positive body portion (1111); wherein a weight ratio of an active material in the positive edge portion (1112) to the positive edge portion (1112) is smaller than that of an active material in the positive body portion (1111) to the positive body portion (1111), such that the capacity per unit area of the positive edge portion (1112) is smaller than that of the positive body portion (1111).

2. The electrode assembly (10) according to claim 1, **characterized in that** a particle size of the active material in the negative edge portion (1212) is smaller than that of the active material in the negative body portion (1211).

3. The electrode assembly (10) according to claim 1 or 2, **characterized in that**
the negative pole piece (12) comprises a negative current collector (122), and the negative current collector (122) comprises a negative coating region (1221) and a negative tab (1222), the negative coating region (1221) being coated with at least part of the negative active material layer (121), the negative tab (1222) being connected to an end, in a first direction, of the negative coating region (1221), and the first direction being perpendicular to the stacking direction; and
the number of the negative edge portions (1212) is at least two, and the negative edge portions (1212) are positioned on two sides, in the first direction, of the negative body portion (1211) respectively, particularly wherein a size of a portion, overlapping the positive active material layer (111) in the stacking direction, of the negative edge portion (1212) is greater than 0.5 mm in the first direction.

4. The electrode assembly (10) according to claim 3, **characterized in that** in the two negative edge portions (1212), a thickness of at least part of the negative edge portion (1212) close to the negative tab (1222) is smaller than that of the negative body portion (1211), and a thickness of the negative edge portion (1212) far away from the negative tab (1222) is equal to that of the negative body portion (1211), particularly wherein a size of a portion, overlapping the positive active material layer (111) in the stacking direction, of the negative edge portion (1212) is greater than 0.5 mm in the first direction.

5. The electrode assembly (10) according to claim 1 or 2, **characterized in that** the negative edge portion (1212) is arranged around the negative body portion (1211).

6. The electrode assembly (10) according to any one of claims 1-5, **characterized in that** a particle size of the active material in the positive edge portion (1112) is greater than that of the active material in the positive body portion (1111), particularly wherein
the positive pole piece (11) comprises a positive current collector (112) comprising a positive coating region (1121) and a positive tab (1122), the positive coating region (1121) being coated with at least part of the positive active material layer (111), the positive tab (1122) being connected to an end, in the first direction, of the positive coating region (1121), and the first direction being perpendicular to the stacking direction; and
the number of the positive edge portions (1112) is at least two, and the positive edge portions (1112) are positioned on two sides, in the first direction, of the positive body portion (1111) respectively, and more particularly wherein a size of the positive edge portion (1112) is greater than 0.5 mm in the first direction.

7. The electrode assembly (10) according to claim 6, **characterized in that** in the two positive edge portions (1112), a thickness of at least part of the positive edge portion (1112) close to the positive tab (1122) is smaller than that of the positive body portion (1111), and a thickness of the positive edge portion (1112) far away from the positive tab (1122) is equal to that of the positive body portion (1111), particularly wherein a size of the positive edge portion (1112) is greater than 0.5 mm in the first direction.

8. The electrode assembly (10) according to any one of claims 1-5, wherein the positive edge portion (1112) is arranged around the positive body portion (1111).

9. A battery cell (7), comprising:
a case (20) and
at least one electrode assembly (10) according to any one of claims 1-8, the electrode assembly (10) being accommodated in the case.

10. An electric apparatus, comprising a battery (2) with a box (5) and
at least one battery cell (7) according to claim 9, the battery cell (7) being accommodated in the box (5), wherein the battery (2) being used for supplying electrical energy.

11. A manufacturing method for an electrode assembly (10), comprising:
supplying a positive pole piece (11);
supplying a negative pole piece (12); and
stacking the positive pole piece (11) and the negative pole piece (12), such that a positive active material layer (111) of the positive pole piece (11) and a negative active material layer (121) of the negative pole piece (12) are arranged oppositely, and an end of the negative active material layer (121) extends beyond the positive active material layer (111),
wherein the negative active material layer (121) comprises a negative body portion (1211) and a negative edge portion (1212) connected thereto, one end, away from the negative body portion (1211), of the negative edge portion (1212) extends beyond the positive active material layer (111), in a stacking direction of the positive pole piece (11) and the negative pole piece (12), at least part of the negative edge portion (1212) overlaps the positive active material layer (111), and the negative active material layer (121) is configured in such a way that a capacity per unit area of the negative edge portion (1212) is greater than that of the negative body portion (1211);
wherein a weight ratio of an active material in the negative edge portion (1212) to the negative edge portion (1212) is greater than that of an active material in the negative body portion (1211) to the negative body portion (1211), such that the capacity per unit area of the negative edge portion (1212) is greater than that of the negative body portion (1211); and/or the positive active material layer (111) includes a positive body portion (1111) and a positive edge portion (1112) connected thereto, and the positive edge portion (1112) is configured in such a way that a capacity per unit area of the positive edge portion (1112) is smaller than that of the positive body portion (1111);
wherein a weight ratio of an active material in the positive edge portion (1112) to the positive edge portion (1112) is smaller than that of an active material in the positive body portion (1111) to the positive body portion (1111), such that the capacity per unit area of the positive edge portion (1112) is smaller than that of the positive body portion (1111).

## Patentansprüche

1. Elektrodenbaugruppe (10) mit einem positiven Polstück (11) und einem negativen Polstück (12), die gestapelt sind, **gekennzeichnet dadurch, dass** eine positive Aktivmaterialschicht (111) des positiven Polstücks (11) und eine negative Aktivmaterialschicht (121) des negativen Polstücks (12) gegenüberliegend angeordnet sind und ein Ende der negativen Aktivmaterialschicht (121) sich über die positive Aktivmaterialschicht (111) hinaus erstreckt;
wobei die negative Aktivmaterialschicht (121) einen negativen Körperabschnitt (1211) und einen damit verbundenen negativen Randabschnitt (1212) aufweist, ein von dem negativen Körperabschnitt (1211) entferntes Ende des negativen Randabschnitts (1212) sich über die positive Aktivmaterialschicht (111) hinaus erstreckt, in einer Stapelrichtung des positiven Polstücks (11) und des negativen Polstücks (12) zumindest ein Teil des negativen Randabschnitts (1212) die positive Aktivmaterialschicht (111) überlappt und die negative Aktivmaterialschicht (121) derart eingerichtet ist, dass eine Kapazität pro Flächeneinheit des negativen Randabschnitts (1212) größer als die des negativen Körperabschnitts (1211) ist;
wobei ein Gewichtsverhältnis eines Aktivmaterials in dem negativen Randabschnitt (1212) zu dem negativen Randabschnitt (1212) größer als das eines Aktivmaterials in dem negativen Körperabschnitt (1211) zu dem negativen Körperabschnitt (1211) ist, sodass die Kapazität pro Flächeneinheit des negativen Randabschnitts (1212) größer als die des negativen Körperabschnitts (1211) ist;
und/oder die positive Aktivmaterialschicht (111) einen positiven Körperabschnitt (1111) und einen damit verbundenen positiven Randabschnitt (1112) aufweist und der positive Randabschnitt (1112) derart eingerichtet ist, dass eine Kapazität pro Flächeneinheit des positiven Randabschnitts (1112) kleiner als die des positiven Körperabschnitts (1111) ist;
wobei ein Gewichtsverhältnis eines Aktivmaterials in dem positiven Randabschnitt (1112) zu dem positiven Randabschnitt (1112) kleiner als das eines Aktivmaterials in dem positiven Körperabschnitt (1111) zu dem positiven Körperabschnitt (1111) ist, sodass die Kapazität pro Flächeneinheit des positiven Randabschnitts (1112) kleiner als die des positiven Körperabschnitts (1111) ist.

2. Elektrodenbaugruppe (10) nach Anspruch 1, **gekennzeichnet dadurch, dass** eine Partikelgröße des Aktivmaterials in dem negativen Randabschnitt (1212) kleiner ist als die des Aktivmaterials in dem negativen Körperabschnitt (1211).

3. Elektrodenbaugruppe (10) nach Anspruch 1 oder 2, **gekennzeichnet dadurch, dass**
das negative Polstück (12) einen negativen Stromsammler (122) aufweist und der negative Stromsammler (122) einen negativen Beschichtungsbereich (1221) und eine negative Anschlussfahne (1222) aufweist, wobei der negative Beschichtungsbereich (1221) mit mindestens einem Teil der negativen Aktivmaterialschicht (121) beschichtet ist, die negative Anschlussfahne (1222) mit einem in einer ersten Richtung liegenden Ende des negativen Beschichtungsbereichs (1221) verbunden ist und die erste Richtung senkrecht zu der Stapelrichtung ist; und
die Anzahl der negativen Randabschnitte (1212) mindestens zwei beträgt und die negativen Randabschnitte (1212) an zwei Seiten, in der ersten Richtung, des negativen Körperabschnitts (1211) positioniert sind, insbesondere wobei eine Größe eines die positive Aktivmaterialschicht (111) in der Stapelrichtung überlappenden Abschnitts des negativen Randabschnitts (1212) in der ersten Richtung größer als 0,5 mm ist.

4. Elektrodenbaugruppe (10) nach Anspruch 3, **gekennzeichnet dadurch, dass** in den zwei negativen Randabschnitten (1212) eine Dicke von mindestens einem Teil des negativen Randabschnitts (1212) nahe der negativen Anschlussfahne (1222) kleiner ist als die des negativen Körperabschnitts (1211) und eine Dicke des negativen Randabschnitts (1212) weit entfernt von der negativen Anschlussfahne (1222) gleich der des negativen Körperabschnitts (1211) ist, insbesondere wobei eine Größe eines die positive Aktivmaterialschicht (111) in der Stapelrichtung überlappenden Abschnitts des negativen Randabschnitts (1212) in der ersten Richtung größer als 0,5 mm ist.

5. Elektrodenbaugruppe (10) nach Anspruch 1 oder 2, **gekennzeichnet dadurch, dass** der negative Randabschnitt (1212) um den negativen Körperabschnitt (1211) herum angeordnet ist.

6. Elektrodenbaugruppe (10) nach einem der Ansprüche 1-5, **gekennzeichnet dadurch, dass** eine Partikelgröße des Aktivmaterials in dem positiven Randabschnitt (1112) größer als die des Aktivmaterials in dem positiven Körperabschnitt (1111) ist, insbesondere wobei
das positive Polstück (11) einen positiven Stromsammler (112) aufweist, der einen positiven Beschichtungsbereich (1121) und eine positive Anschlussfahne (1122) aufweist, wobei der positive Beschichtungsbereich (1121) mit mindestens einem Teil der positiven Aktivmaterialschicht (111) beschichtet ist, die positive Anschlussfahne (1122) mit einem in der ersten Richtung liegenden Ende des positiven Beschichtungsbereichs (1121) verbunden ist und die erste Richtung senkrecht zu der Stapelrichtung ist; und
die Anzahl der positiven Randabschnitte (1112) mindestens zwei beträgt und die positiven Randabschnitte (1112) an zwei Seiten, in der ersten Richtung, des positiven Körperabschnitts (1111) positioniert sind und insbesondere wobei eine Größe des positiven Randabschnitts (1112) in der ersten Richtung größer als 0,5 mm ist.

7. Elektrodenbaugruppe (10) nach Anspruch 6, **gekennzeichnet dadurch, dass** in den zwei positiven Randabschnitten (1112) eine Dicke von mindestens einem Teil des positiven Randabschnitts (1112) nahe der positiven Anschlussfahne (1122) kleiner ist als die des positiven Körperabschnitts (1111) und eine Dicke des positiven Randabschnitts (1112) weit entfernt von der positiven Anschlussfahne (1122) gleich der des positiven Körperabschnitts (1111) ist, insbesondere wobei eine Größe des positiven Randabschnitts (1112) in der ersten Richtung größer als 0,5 mm ist.

8. Elektrodenbaugruppe (10) nach einem der Ansprüche 1-5, wobei der positive Randabschnitt (1112) um den positiven Körperabschnitt (1111) herum angeordnet ist.

9. Batteriezelle (7) mit:
einem Gehäuse (20) und
mindestens einer Elektrodenbaugruppe (10) nach einem der Ansprüche 1-8, wobei die Elektrodenbaugruppe (10) in dem Gehäuse untergebracht ist.

10. Elektrische Vorrichtung, aufweisend eine Batterie (2) mit einem Kasten (5) und mindestens einer Batteriezelle (7) nach Anspruch 9, wobei die Batteriezelle (7) in dem Kasten (5) untergebracht ist, wobei die Batterie (2) zur elektrischen Energieversorgung verwendet wird.

11. Herstellungsverfahren für eine Elektrodenbaugruppe (10), umfassend:
Zuführen eines positiven Polstücks (11);
Zuführen eines negativen Polstücks (12); und
Stapeln des positiven Polstücks (11) und des negativen Polstücks (12) derart, dass eine positive Aktivmaterialschicht (111) des positiven Polstücks (11) und eine negative Aktivmaterialschicht (121) des negativen Polstücks (12) gegenüberliegend angeordnet werden und ein Ende der negativen Aktivmaterialschicht (121) sich über die positive Aktivmaterialschicht (111) hinaus erstreckt,
wobei die negative Aktivmaterialschicht (121) einen negativen Körperabschnitt (1211) und einen damit verbundenen negativen Randabschnitt (1212) aufweist, ein von dem negativen Körperabschnitt (1211) entferntes Ende des negativen Randabschnitts (1212) sich über die positive Aktivmaterialschicht (111) hinaus erstreckt, in einer Stapelrichtung des positiven Polstücks (11) und des negativen Polstücks (12) mindestens ein Teil des negativen Randabschnitts (1212) die positive Aktivmaterialschicht (111) überlappt und die negative Aktivmaterialschicht (121) derart eingerichtet ist, dass eine Kapazität pro Flächeneinheit des negativen Randabschnitts (1212) größer als die des negativen Körperabschnitts (1211) ist;
wobei ein Gewichtsverhältnis eines Aktivmaterials in dem negativen Randabschnitt (1212) zu dem negativen Randabschnitt (1212) größer als das eines Aktivmaterials in dem negativen Körperabschnitt (1211) zu dem negativen Körperabschnitt (1211) ist, sodass die Kapazität pro Flächeneinheit des negativen Randabschnitts (1212) größer als die des negativen Körperabschnitts (1211) ist; und/oder die positive Aktivmaterialschicht (111) einen positiven Körperabschnitt (1111) und einen damit verbundenen positiven Randabschnitt (1112) aufweist und der positive Randabschnitt (1112) derart eingerichtet ist, dass eine Kapazität pro Flächeneinheit des positiven Randabschnitts (1112) kleiner als die des positiven Körperabschnitts (1111) ist;
wobei ein Gewichtsverhältnis eines Aktivmaterials in dem positiven Randabschnitt (1112) zu dem positiven Randabschnitt (1112) kleiner als das eines Aktivmaterials in dem positiven Körperabschnitt (1111) zu dem positiven Körperabschnitt (1111) ist, sodass die Kapazität pro Flächeneinheit des positiven Randabschnitts (1112) kleiner als die des positiven Körperabschnitts (1111) ist.

## Revendications

1. Un ensemble d'électrodes (10), comprenant une pièce polaire positive (11) et une pièce polaire négative (12) qui sont empilées, **caractérisé en ce qu'**une couche de matière active positive (111) de la pièce polaire positive (11) et une couche de matière active négative (121) de la pièce polaire négative (12) sont disposées de manière opposée, et une extrémité de la couche de matière active négative (121) s'étend au-delà de la couche de matière active positive (111);
la couche de matière active négative (121) comprend une portion de corps négative (1211) et une portion de bord négative (1212) reliée à celle-ci, une extrémité, éloignée de la portion de corps négative (1211), de la portion de bord négative (1212) s'étend au-delà de la couche de matière active positive (111), dans une direction d'empilement de la pièce polaire positive (11) et de la pièce polaire négative (12), au moins une partie de la portion de bord négative (1212) chevauche la couche de matière active positive (111), et la couche de matière active négative (121) est configurée de telle sorte qu'une capacité par unité de surface de la portion de bord négative (1212) est supérieure à celle de la portion de corps négative (1211); dans lequel un rapport en poids d'une matière active dans la portion de bord négative (1212) à la portion de bord négative (1212) est supérieur à celui d'une matière active dans la portion de corps négative (1211) à la portion de corps négative (1211), de sorte que la capacité par unité de surface de la portion de bord négative (1212) est supérieure à celle de la portion de corps négative (1211);
et/ou la couche de matière active positive (111) comprend une portion de corps positive (1111) et une portion de bord positive (1112) reliée à celle-ci, et la portion de bord positive (1112) est configurée de telle manière qu'une capacité par unité de surface de la portion de bord positive (1112) est inférieure à celle de la portion de corps positive (1111); dans lequel un rapport en poids d'une matière active dans la portion de bord positive (1112) à la portion de bord positive (1112) est inférieur à celui d'une matière active dans la portion de corps positive (1111) à la portion de corps positive (1111), de sorte que la capacité par unité de surface de la portion de bord positive (1112) est inférieure à celle de la portion de corps positive (1111).

2. L'ensemble d'électrodes (10) selon la revendication 1, **caractérisé en ce que** la taille des particules de la matière active dans la portion de bord négative (1212) est inférieure à celle de la matière active dans la portion de corps négative (1211).

3. L'ensemble d'électrodes (10) selon la revendication 1 ou 2, **caractérisé en ce que** la
pièce polaire négative (12) comprend un collecteur de courant négatif (122), et le collecteur de courant négatif (122) comprend une région de revêtement négatif (1221) et une languette négative (1222), la région de revêtement négatif (1221) étant recouverte d'au moins une partie de la couche de matière active négative (121), la languette négative (1222) étant reliée à une extrémité, dans une première direction, de la région de revêtement négatif (1221), et la première direction étant perpendiculaire à la direction d'empilement; et
le nombre de portions de bord négatives (1212) est d'au moins deux, et les portions de bord négatives (1212) sont positionnées sur deux côtés, dans la première direction, de la portion de corps négative (1211) respectivement, en particulier dans lequel une taille d'une portion, chevauchant la couche de matière active positive (111) dans la direction d'empilement, de la portion de bord négative (1212) est supérieure à 0.5 mm dans la première direction.

4. L'ensemble d'électrodes (10) selon la revendication 3, **caractérisé en ce que** dans les deux portions de bord négatives (1212), une épaisseur d'au moins une partie de la portion de bord négative (1212) proche de la languette négative (1222) est inférieure à celle de la portion de corps négative (1211), et une épaisseur de la portion de bord négative (1212) éloignée de la languette négative (1222) est égale à celle de la portion de corps négative (1211), en particulier dans lequel une taille d'une portion, chevauchant la couche de matière active positive (111) dans la direction d'empilement, de la portion de bord négative (1212) est supérieure à 0.5 mm dans la première direction.

5. L'ensemble d'électrodes (10) selon la revendication 1 ou 2, **caractérisé en ce que** la portion de bord négative (1212) est disposée autour de la portion de corps négative (1211).

6. L'ensemble d'électrodes (10) selon l'une quelconque des revendications 1 à 5, **caractérisé en ce qu'**une taille des particules de la matière active dans la portion de bord positive (1112) est supérieure à celle de la matière active dans la portion de corps positive (1111), en particulier dans lequel
la pièce polaire positive (11) comprend un collecteur de courant positif (112) comprenant une région de revêtement positif (1121) et une languette positive (1122), la région de revêtement positif (1121) étant recouverte d'au moins une partie de la couche de matière active positive (111), la languette positive (1122) étant reliée à une extrémité, dans la première direction, de la région de revêtement positif (1121), et la première direction étant perpendiculaire à la direction d'empilement; et
le nombre de portions de bord positives (1112) est d'au moins deux, et les portions de bord positives (1112) sont positionnées sur deux côtés, dans la première direction, de la portion de corps positive (1111) respectivement, et plus particulièrement dans lequel une taille de la portion de bord positive (1112) est supérieure à 0.5 mm dans la première direction.

7. L'ensemble d'électrodes (10) selon la revendication 6, **caractérisé en ce que** dans les deux portions de bord positives (1112), une épaisseur d'au moins une partie de la portion de bord positive (1112) proche de la languette positive (1122) est inférieure à celle de la portion de corps positive (1111), et une épaisseur de la portion de bord positive (1112) éloignée de la languette positive (1122) est égale à celle de la portion de corps positive (1111), en particulier dans lequel une taille de la portion de bord positive (1112) est supérieure à 0.5 mm dans la première direction.

8. L'ensemble d'électrodes (10) selon l'une quelconque des revendications 1 à 5, dans lequel la portion du bord positive (1112) est disposée autour de la portion de corps positive (1111).

9. Une cellule de batterie (7), comprenant:
un boîtier (20) et
au moins un ensemble d'électrodes (10) selon l'une quelconque des revendications 1 à 8, l'ensemble d'électrodes (10) étant logé dans le boîtier.

10. Un appareil électrique, comprenant une batterie (2) avec un caisson (5) et
au moins une cellule de batterie (7) selon la revendication 9, la cellule de batterie (7) étant logée dans le caisson (5), dans lequel la batterie (2) étant utilisée pour fournir de l'énergie électrique.

11. Un procédé de fabrication d'un ensemble d'électrodes (10), comprenant:
fournir une pièce polaire positive (11);
fournir une pièce polaire négative (12); et
empiler la pièce polaire positive (11) et la pièce polaire négative (12), de telle sorte qu'une couche de matière active positive (111) de la pièce polaire positive (11) et une couche de matière active négative (121) de la pièce polaire négative (12) sont disposées de manière opposée, et une extrémité de la couche de matière active négative (121) s'étende au-delà de la couche de matière active positive (111),
dans lequel la couche de matière active négative (121) comprend une portion de corps négative (1211) et une portion de bord négative (1212) reliée à celle-ci, une extrémité, éloignée de la portion de corps négative (1211), de la portion de bord négative (1212) s'étend au-delà de la couche de matière active positive (111), dans une direction d'empilement de la pièce polaire positive (11) et de la pièce polaire négative (12), au moins une partie de la portion de bord négative (1212) chevauche la couche de matière active positive (111), et la couche de matière active négative (121) est configurée de telle sorte qu'une capacité par unité de surface de la portion de bord négative (1212) est supérieure à celle de la portion de corps négative (1211);
dans lequel un rapport en poids d'une matière active dans la portion de bord négative (1212) à la portion de bord négative (1212) est supérieur à celui d'une matière active dans la portion de corps négative (1211) à la portion de corps négative (1211), de sorte que la capacité par unité de surface de la portion de bord négative (1212) est supérieure à celle de la portion de corps négative (1211); et/ou la couche de matière active positive (111) comprend une portion de corps positive (1111) et une portion de bord positive (1112) reliée à celle-ci, et la portion de bord positive (1112) est configurée de telle manière qu'une capacité par unité de surface de la portion de bord positive (1112) est inférieure à celle de la portion de corps positive (1111);
dans lequel un rapport en poids d'une matière active dans la portion de bord positive (1112) à la portion de bord positive (1112) est inférieur à celui d'une matière active dans la portion de corps positive (1111) à la portion de corps positive (1111), de sorte que la capacité par unité de surface de la portion de bord positive (1112) est inférieure à celle de la portion de corps positive (1111).
